(19) Europäisches Patentamt
European Patent Office
Office européen des brevets

(11) **EP 4 589 488 B1**

(12) **EUROPEAN PATENT SPECIFICATION**

(45) Date of publication and mention of the grant of the patent:
**25.02.2026 Bulletin 2026/09**

(21) Application number: **24213520.0**

(22) Date of filing: **18.11.2024**

(51) International Patent Classification (IPC):
***G06N 10/60*** *(2022.01)* ***G06N 10/70*** *(2022.01)*
***G06N 10/20*** *(2022.01)*

(52) Cooperative Patent Classification (CPC):
**G06N 10/60; G06N 10/20; G06N 10/70**

(54) **COMPUTER-READABLE RECORDING MEDIUM STORING QUANTUM CALCULATION SUPPORT PROGRAM, QUANTUM CALCULATION SUPPORT METHOD, AND INFORMATION PROCESSING DEVICE**

COMPUTERLESBARES AUFZEICHNUNGSMEDIUM MIT DARAUF GESPEICHERTEM QUANTENBERECHNUNGSUNTERSTÜTZUNGSPROGRAMM, QUANTENBERECHNUNGSUNTERSTÜTZUNGSVERFAHREN UND INFORMATIONSVERARBEITUNGSVORRICHTUNG

SUPPORT D'ENREGISTREMENT LISIBLE PAR ORDINATEUR STOCKANT UN PROGRAMME DE SUPPORT DE CALCUL QUANTIQUE, PROCÉDÉ DE SUPPORT DE CALCUL QUANTIQUE ET DISPOSITIF DE TRAITEMENT D'INFORMATIONS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.01.2024 JP 2024007190**

(43) Date of publication of application:
**23.07.2025 Bulletin 2025/30**

(73) Proprietor: **FUJITSU LIMITED**
**Kawasaki-shi, Kanagawa 211-8588 (JP)**

(72) Inventor: **Matsumoto, Norifumi**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(56) References cited:

- **JO\~AO C GETELINA ET AL: "Adaptive variational quantum minimally entangled typical thermal states for finite temperature simulations", ARXIV.ORG, CORNELL UNIVERSITY LIBRARY, 201 OLIN LIBRARY CORNELL UNIVERSITY ITHACA, NY 14853, 4 August 2023 (2023-08-04), XP091579676**
- **ANDERS W SANDVIK: "Stochastic series expansion method with operator-loop update", ARXIV.ORG, CORNELL UNIVERSITY LIBRARY, 201 OLIN LIBRARY CORNELL UNIVERSITY ITHACA, NY 14853, 16 February 1999 (1999-02-16), XP080651152, DOI: 10.1103/PHYSREVB.59.R14157**
- **THAIS DE LIMA SILVA ET AL: "Fragmented imaginary-time evolution for early-stage quantum signal processors", ARXIV.ORG, CORNELL UNIVERSITY LIBRARY, 201 OLIN LIBRARY CORNELL UNIVERSITY ITHACA, NY 14853, 1 November 2023 (2023-11-01), XP091649534, DOI: 10.1038/S41598-023-45540-2**
- **KOSUGI TAICHI ET AL: "Imaginary-time evolution using forward and backward real-time evolution with a single ancilla: First-quantized eigensolver algorithm for quantum chemistry", vol. 4, no. 3, 11 August 2022 (2022-08-11), College Park, US, XP093204834, ISSN: 2643-1564, Retrieved from the Internet <URL:https://journals.aps.org/prresearch/pdf/10.1103/PhysRevResearch.4.033121> DOI: 10.1103/PhysRevResearch.4.033121**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- NAOKI IRIKURA ET AL: "Neural-network quantum states at finite temperature", ARXIV.ORG, CORNELL UNIVERSITY LIBRARY, 201 OLIN LIBRARY CORNELL UNIVERSITY ITHACA, NY 14853, 7 November 2019 (2019-11-07), XP081528205

**Description**

FIELD

The embodiments discussed herein are related to a quantum calculation support program, a quantum calculation support method, and an information processing device.

BACKGROUND

In a quantum computer, an error is likely to occur in a state of a qubit due to environmental noise or the like. In a qubit error correction technology (quantum error correction), information is made redundant and encoded. In order to implement the quantum error correction at a practical level, a large number of qubits of about 1 million are used. On the other hand, currently implemented quantum computers are limited to small and medium-scale quantum computers (noisy intermediate scale quantum computer (NISQ)) consisting of at most about several hundred qubits, and these devices are not capable of performing quantum error correction.

A quantum computer capable of performing the quantum error correction is referred to as a fault tolerant quantum computer (FTQC). Among the FTQCs, an intermediate-scale one is expected to be implemented relatively early, and may be referred to as an early-FTQC device.

One of fields where calculation by the quantum computer is effective is calculation of a physical quantity of a quantum system. Particularly meaningful in practice is calculation of a thermal equilibrium expectation value at a finite temperature. In order to obtain the thermal equilibrium expectation value at the finite temperature, for example, an expectation value regarding an ensemble of quantum states expressing a thermal equilibrium state is calculated. One of the ensembles expressing the thermal equilibrium state at the finite temperature is a canonical statistical ensemble (canonical ensemble). As a method of efficiently generating the canonical statistical ensemble, a minimally entangled typical thermal state (METTS) algorithm is known.

Although the METTS algorithm is originally devised as a calculation method executed by a classical computer, an equivalent method may also be executed by the quantum computer. An algorithm equivalent to the METTS executable by the quantum computer is particularly referred to as a quantum METTS (QMETTS).

In the METTS algorithm, an imaginary-time evolution algorithm is used to implement a Boltzmann weight (the same applies to the QMETTS). One of methods of quantum imaginary-time evolution for implementing imaginary-time evolution by the quantum computer is a method based on linear combination of unitaries (LCU). The LCU is a quantum calculation method based on polynomial expansion of imaginary-time evolution, expressing a polynomial of each order by a quantum circuit, where a physical quantity is calculated via linear combination of all the quantum circuits.

In a case where the LCU is implemented by an early-FTQC device, a target physical quantity is calculated based on a calculation result obtained by causing each of a plurality of partial circuits extracted from an original quantum circuit to act on the target system. Since an object to be executed is a small-scale partial circuit, calculation may be performed even with early-FTQC devices.

As a technology regarding the quantum computer, for example, there has been proposed a method for obtaining an excited state of a Hamiltonian. Furthermore, there has been proposed a combinatorial optimization calculation method for obtaining an executable solution even for a problem whose executable solution may not be obtained by a feedback-based algorithm for quantum optimization (FALQON). Moreover, there has also been proposed a quantum algorithm that improves quantum optimization by using marginal data.

JOÃO C GETELINA ET AL: "Adaptive variational quantum minimally entangled typical thermal states for finite temperature simulations", ARXIV.ORG, CORNELL UNIVERSITY LIBRARY, 201 OLIN LIBRARY CORNELL UNIVERSITY ITHACA, NY 14853, 4 August 2023 (2023-08-04) teaches an adaptive variational quantum algorithm for performing imaginary-time evolution to calculate finite-temperature thermal properties. This method approximates the quantum state using a parameterized ansatz circuit that is dynamically constructed by solving classical equations of motion derived from a variational principle. ANDERS W SANDVIK: "Stochastic series expansion method with operator-loop update", ARXIV.ORG, CORNELL UNIVERSITY LIBRARY, 201 OLIN LIBRARY CORNELL UNIVERSITY ITHACA, NY 14853, 16 February 1999 (1999-02-16) discloses a stochastic series expansion method that expands the partition function into a power series of the Hamiltonian to simulate finite-temperature quantum systems. This approach calculates thermal expectation values by sampling the terms of the expansion using a classical Monte Carlo procedure involving operator-loop updates. Furthermore, International Publication Pamphlet No. WO 2020/090559, Japanese Laid-open Patent Publication No. 2023-043100, U.S. Patent Application Publication No. 2020/0057957, E M Stoudenmire and Steven R White, "Minimally entangled typical thermal state algorithms", New Journal of Physics, Volume 12 055026, May 2010, and Andrew M. Childs and Nathan Wiebe, "Hamiltonian simulation using linear combinations of unitary operations", Quantum information & Computation, Volume 12, Issue 11-12, November 2012, pp 901-924 are disclosed as related art.

## SUMMARY

### TECHNICAL PROBLEM

In the conventional system explained above, by using the LCU, it is possible to calculate the thermal equilibrium expectation value of the physical quantity at the finite temperature by early-FTQC devices. However, in order to calculate the thermal equilibrium expectation value of the physical quantity at the finite temperature, an enormous number of states are randomly sampled and calculated from a large number of states exponentially for a size of a focused system to be calculated, and calculation efficiency is poor. For example, in the calculation of the thermal equilibrium expectation value of the physical quantity at the finite temperature, the conventional system has a technological problem in terms of the efficient use of computer hardware such as storage capacity and processors.

In one aspect, an object of the present case is to improve calculation efficiency of a thermal equilibrium expectation value of a physical quantity at a finite temperature.

### SOLUTION TO PROBLEM

According to an aspect of the embodiments, there is provided a quantum calculation support program comprising instructions which, when executed by a computer coupled to a quantum computer, cause the computer to execute processing including: expanding an imaginary-time evolution expression into a plurality of expressions, the imaginary-time evolution expression being an expression for calculation of a thermal equilibrium expectation value at a finite temperature of a physical quantity of a system to be calculated, each of the plurality of expressions being an expression of a corresponding order among a plurality of orders; generating a plurality of sets of orders, each of which is obtained by extracting an order twice from the plurality of orders; generating, for each set of the generated sets, a quantum circuit that indicates a procedure of quantum calculation of a value of the physical quantity obtained by partial imaginary-time evolution using an expression of a first order included in the set and an expression of a second order included in the set, each of the first and second orders being any of the plurality of orders; causing the quantum computer to repeatedly execute, for each set of the generated sets, the quantum calculation using the quantum circuit generated for the set until a value of the physical quantity obtained from a result of the quantum calculation converges in a manner that an output state obtained by the quantum calculation according to the quantum circuit corresponding to the set is used as an input state in the subsequent quantum calculation; and calculating the thermal equilibrium expectation value at the finite temperature of the physical quantity based on a value of the physical quantity after convergence for each of the generated sets.

### ADVANTAGEOUS EFFECTS OF INVENTION

According to one aspect, the efficiency of calculating a thermal equilibrium expectation value of a physical quantity at a finite temperature is improved. For example, in calculating the thermal equilibrium expectation value of the physical quantity at the finite temperature, the efficiency of using computer hardware such as memory and processors is improved.

### BRIEF DESCRIPTION OF DRAWINGS

FIG. 1 is a diagram illustrating an example of a quantum calculation support method according to a first embodiment;
FIG. 2 is a diagram illustrating an example of a configuration of a quantum calculation system;
FIG. 3 is a diagram illustrating an example of hardware of a classical computer;
FIG. 4 is a diagram illustrating a first example (first implementation method) of a quantum circuit for implementing linear combination of unitaries (LCU);
FIG. 5 is a diagram illustrating a second example (second implementation method) of the quantum circuit for implementing the LCU;
FIG. 6 is a diagram illustrating an example of an efficient calculation method of a thermal equilibrium expectation value of a physical quantity at a finite temperature;
FIG. 7 is a diagram illustrating an example of a condition under which a partial circuit exhibits a Hermitian property;
FIG. 8 is a block diagram illustrating an example of functions of a quantum calculation system;
FIG. 9 is a flowchart illustrating an example of a calculation procedure of a finite temperature expectation value;
FIG. 10 is a diagram illustrating an example of an Ising model;
FIG. 11 is a diagram illustrating an example of a comparison result of calculation precision of a thermal equilibrium expectation value of energy; and

FIG. 12 is a diagram illustrating an example of a comparison result of calculation efficiency of the thermal equilibrium expectation value of the energy.

DESCRIPTION OF EMBODIMENTS

Hereinafter, the present embodiments will be described with reference to the drawings. Note that each of the embodiments may be implemented in combination with the plurality of embodiments as long as no contradiction arises.

[First Embodiment]

A first embodiment is a quantum calculation support method for efficiently calculating a thermal equilibrium expectation value of a physical quantity at a finite temperature.

FIG. 1 is a diagram illustrating an example of the quantum calculation support method according to the first embodiment. In FIG. 1, an information processing device 10 for implementing the quantum calculation support method according to the first embodiment is illustrated. The information processing device 10 may implement the quantum calculation support method according to the first embodiment by, for example, executing a quantum calculation support program.

The information processing device 10 is coupled to a quantum computer 1. The information processing device 10 causes the quantum computer 1 to implement quantum calculation. Furthermore, the information processing device 10 acquires a measurement result by the quantum calculation from the quantum computer 1.

The information processing device 10 includes a storage unit 11 and a processing unit 12. The storage unit 11 is, for example, a memory or a storage device included in the information processing device 10. The processing unit 12 is, for example, a processor or an arithmetic circuit included in the information processing device 10. The information processing device 10 is, for example, a classical computer.

The processing unit 12 calculates a thermal equilibrium expectation value of a physical quantity at a finite temperature by the following procedure.

The processing unit 12 expands an imaginary-time evolution expression for calculating a thermal equilibrium expectation value at a finite temperature of a physical quantity of a system to be calculated (target system) into an expression of each of a plurality of orders. A specific expression for expanding imaginary-time evolution will be described later (see Expression (2)). As a result, for example, a plurality of nth-order (n is an order) expressions such as a zeroth-order expression, a first-order expression, and a second-order expression are obtained.

Next, the processing unit 12 generates a plurality of sets of orders (a, b) each of which is obtained by extracting an order twice from the plurality of orders (a and b are integers indicating the extracted orders). Next, the processing unit 12 generates, for each generated set, a quantum circuit 2 indicating a procedure of quantum calculation of a value of a physical quantity obtained by partial imaginary-time evolution based on an expression of a first order included in the set and an expression of a second order included in the set. Details of an expression for calculating the value of the physical quantity will be described later (see Expression (1)). For example, the processing unit 12 generates the quantum circuit 2 having a Hermitian property under a certain condition on measurement outcomes of ancilla qubits. It is noted that each of the first and second orders in the respective sets is not limited to the first-order (e.g., the largest order ) or the second-order (e.g., the second largest order), but may be any of the plurality of orders.

The quantum circuit 2 does not output a state after the imaginary-time evolution, but outputs a state reflecting only contribution of the sets of the extracted orders. Therefore, the quantum circuit 2 for each set of orders may also be considered as a partial circuit for a quantum circuit indicating the entire imaginary-time evolution.

The quantum circuit 2 includes a first unitary gate indicating calculation of a unitary matrix corresponding to the expression of the first order and a second unitary gate indicating calculation of a unitary matrix corresponding to the expression of the second order. The first unitary gate and the second unitary gate act on qubits of the target system according to a state of an ancilla qubit used as a control qubit. By applying a predetermined condition and performing postselection on the ancilla qubit, the quantum circuit 2 may exhibit the Hermitian property.

Moreover, the processing unit 12 causes the quantum computer 1 to repeatedly execute, for each generated set of orders, the quantum calculation based on the quantum circuit 2 until the value of the physical quantity obtained from a result of the quantum calculation converges. When causing the quantum calculation to be executed, the processing unit 12 sets an output state after the quantum calculation in the quantum circuit 2 corresponding to the set as an input state in subsequent quantum calculation. For example, the processing unit 12 sets a projective measurement result in the computational basis of an output state after calculation of the quantum circuit 2 based on an input state in Nth quantum calculation (N is a natural number) as an input state in (N + 1)th quantum calculation.

The processing unit 12 stores values 3a, 3b, ... of the physical quantity at the time of convergence for the respective generated sets of orders in the storage unit 11, for example. Then, the processing unit 12 calculates the thermal equilibrium expectation value at the finite temperature of the physical quantity based on the values 3a, 3b, ... of the physical quantity after convergence for the respective generated sets of orders. For example, the processing unit 12 calculates a weighted average of the values 3a, 3b, ... of the physical quantity after convergence for the respective generated sets of orders. The obtained weighted average is the thermal equilibrium expectaiton value at the finite temperature of the physical quantity.

In this manner, by setting the output state after the quantum calculation in the quantum circuit 2 corresponding to the generated set of orders as the input state in the subsequent quantum calculation, the input state in a case where the value of the physical quantity is repeatedly calculated based on the quantum circuit 2 becomes a statistical ensemble suitable for the quantum circuit 2.

The statistical ensemble suitable for the quantum circuit 2 is a statistical ensemble capable of early converging the value of the physical quantity calculated based on the quantum circuit 2. For example, it has been confirmed that, by generating the quantum circuit 2 having the Hermitian property under a certain condition on measurement outcomes of ancilla qubits, the statistical ensemble that early converges the value of the physical quantity calculated based on the quantum circuit 2 is obtained. Since the appropriate statistical ensemble is automatically generated, the value of the physical quantity obtained by the quantum calculation converges early, and the processing is made efficient. As such, in calculating the thermal equilibrium expectation value of the physical quantity at the finite temperature, the efficiency of using computer hardware such as memory and processors is improved. For example, the number of repeatedly executing the quantum calculation required to converge the physical quantity may be reduced, resulting in lower memory consumption.

Note that, in the processing of generating the plurality of sets of orders, for example, the processing unit 12 generates the sets of orders each of which is a combination obtained by extracting an order twice from among the plurality of orders while allowing overlap. Since the overlap of the orders is allowed, for example, a set of the first order and the first order and a set of the second order and the second order may also be extracted. Furthermore, in the extraction, since order of the orders in the combination is not considered, a set of an mth order and an nth order (m and n are integers) and a set of the nth order and the mth order are not overlapped and extracted. As a result, the number of sets of orders to be generated may be reduced, and the processing is made efficient. As such, in calculating the thermal equilibrium expectation value of the physical quantity at the finite temperature, the efficiency of using computer hardware such as memory and processors is improved.

Note that, in a case where an error of the quantum computer 1 may not be sufficiently corrected, a set of (m, n) (the mth order first and the nth order second) and a set of (n, m) (the nth order first and the mth order second) may have slightly different actions and should be extracted in consideration of the extraction order. In a case where the set of (m, n) is extracted, the quantum circuit 2 becomes a circuit that first causes a unitary gate corresponding to an mth order expression to act on the qubits of the target system, and then causes a unitary gate corresponding to an nth order expression to act on the qubits of the target system. In contrast, in a case where the set of (n, m) is extracted, the quantum circuit 2 becomes a circuit that first causes the unitary gate corresponding to the nth order expression to act on the qubits of the target system, and then causes the unitary gate corresponding to the mth order expression to act on the qubits of the target system. As a result, calculation precision in a case where the quantum computer 1 in which an error may not be completely corrected is used may be improved.

[Second Embodiment]

A second embodiment is a quantum calculation system for efficiently calculating a thermal equilibrium expectation value at a finite temperature of a physical quantity.

FIG. 2 is a diagram illustrating an example of a configuration of the quantum calculation system. A quantum calculation system 300 is a hybrid computer system in which a classical computer 100 and a quantum computer 200 are operated in cooperation. The classical computer 100 is also referred to as a von Neumann computer.

To the classical computer 100, a terminal device 400 is coupled via a network 20. The terminal device 400 is a computer used by a user who requests quantum calculation by the quantum calculation system 300. The classical computer 100 receives a quantum circuit from the terminal device 400. The quantum circuit indicates order of operations on qubits by arrangement of elements such as gates. The qubit is a bit capable of expressing a superposed state of a state of "0" and a state of "1".

The classical computer 100 instructs the quantum computer 200 to control qubits according to the quantum circuit received from the terminal device 400. Furthermore, the classical computer 100 acquires a measurement result of each qubit from the quantum computer 200.

The quantum computer 200 includes a plurality of qubits and a device for operating each of the plurality of qubits. The plurality of qubits included in the quantum computer 200 is implemented by, for example, a quantum device of a superconducting system. Furthermore, the qubits may be implemented by a quantum device of another system such as a trapped-ion system.

FIG. 3 is a diagram illustrating an example of hardware of the classical computer. The entire device of the classical computer 100 is controlled by a processor 101. A memory 102 and a plurality of peripheral devices are coupled to the processor 101 via a bus 109. The processor 101 may be a multiprocessor. The processor 101 is, for example, a central processing unit (CPU), a micro processing unit (MPU), or a digital signal processor (DSP). At least a part of functions implemented by the processor 101 executing a program may be implemented by an electronic circuit such as an application specific integrated circuit (ASIC) or a programmable logic device (PLD).

The memory 102 is used as a main storage device of the classical computer 100. In the memory 102, at least a part of an operating system (OS) program and an application program to be executed by the processor 101 is temporarily stored. Furthermore, in the memory 102, various types of data to be used in processing by the processor 101 are stored. As the memory 102, for example, a volatile semiconductor storage device such as a random access memory (RAM) is used.

Examples of the peripheral devices coupled to the bus 109 include a storage device 103, a graphics processing unit (GPU) 104, an input interface 105, an optical drive device 106, a device coupling interface 107, and a network interface 108.

The storage device 103 electrically or magnetically writes and reads data to and from a built-in recording medium. The storage device 103 is used as an auxiliary storage device of the classical computer 100. In the storage device 103, an OS program, an application program, and various types of data are stored. Note that, as the storage device 103, for example, a hard disk drive (HDD) or a solid state drive (SSD) may be used.

The GPU 104 is an arithmetic device that performs image processing. The GPU 104 is an example of a graphics controller. A monitor 21 is coupled to the GPU 104. The GPU 104 causes a screen of the monitor 21 to display an image according to an instruction from the processor 101. Examples of the monitor 21 include a display device using organic electro luminescence (EL), a liquid crystal display device, or the like.

A keyboard 22 and a mouse 23 are coupled to the input interface 105. The input interface 105 transmits signals sent from the keyboard 22 and the mouse 23 to the processor 101. Note that the mouse 23 is an example of a pointing device, and another pointing device may also be used. Examples of the another pointing device include a touch panel, a tablet, a touch pad, a track ball, or the like.

The optical drive device 106 uses laser light or the like to read data recorded in an optical disk 24 or write data to the optical disk 24. The optical disk 24 is a portable recording medium in which data is recorded in a readable manner by reflection of light. Examples of the optical disk 24 include a digital versatile disc (DVD), a DVD-RAM, a compact disc read only memory (CD-ROM), a CD-recordable (R)/rewritable (RW), or the like.

The device coupling interface 107 is a communication interface for coupling the peripheral devices to the classical computer 100. For example, a memory device 25 and a memory reader/writer 26 may be coupled to the device coupling interface 107. The memory device 25 is a recording medium equipped with a communication function with the device coupling interface 107. The memory reader/writer 26 is a device that writes data to a memory card 27 or reads data from the memory card 27. The memory card 27 is a card-type recording medium.

The network interface 108 is coupled to the network 20. The network interface 108 performs transmission and reception of data with another computer or communication device via the network 20. The network interface 108 is, for example, a wired communication interface coupled to a wired communication device such as a switch or a router with a cable. Furthermore, the network interface 108 may be a wireless communication interface that is coupled to and communicates with a wireless communication device such as a base station or an access point by radio waves.

The classical computer 100 may implement processing functions of the second embodiment with the hardware described above. Note that the information processing device 10 indicated in the first embodiment may also be implemented by hardware similar to that of the classical computer 100 illustrated in FIG. 3.

The classical computer 100 implements the processing functions of the second embodiment by executing, for example, a program recorded in a computer-readable recording medium. The program in which processing content to be executed by the classical computer 100 is described may be recorded in various recording media. For example, the program to be executed by the classical computer 100 may be stored in the storage device 103. The processor 101 loads at least a part of the program in the storage device 103 into the memory 102, and executes the program. Furthermore, the program to be executed by the classical computer 100 may also be recorded in a portable recording medium such as the optical disk 24, the memory device 25, or the memory card 27. The program stored in the portable recording medium may be executed after being installed in the storage device 103 under control of the processor 101, for example. Furthermore, the processor 101 may read the program directly from the portable recording medium, and execute the program.

Next, a calculation method of a thermal equilibrium expectation value at a finite temperature of a physical quantity of a quantum system will be described in detail. As one of important application destinations of the quantum computer 200, there is calculation of the physical quantity of the quantum system. Particularly meaningful in practice is calculation of the thermal equilibrium expectation value at the finite temperature. Here, the finite temperature refers to a temperature other than absolute zero.

In a case where the thermal equilibrium expectation value at the finite temperature is obtained, for example, an expectation value of a physical quantity regarding an ensemble of quantum states expressing a thermal equilibrium state is calculated. As the ensemble of the quantum states expressing the thermal equilibrium state at the finite temperature, there is a canonical statistical ensemble. The canonical statistical ensemble is an ensemble of quantum states in which an eigenstate | E> having an energy eigenvalue E appears according to a probability distribution referred to as a Boltzmann weight.

When a canonical statistical ensemble $\rho$ is represented by an expression, "$\rho = \Sigma_E(e^{-\beta E}/Z) | E><E |$" is defined. In this expression, "$e^{-\beta E}/Z$" is the Boltzmann weight. A thermal equilibrium expectation value <O> of a physical quantity regarding the canonical statistical ensemble is "$<O> = \Sigma_E(e^{-\beta E}/Z)<E | O |E>$". Here, Z is the partition function "$Z = \Sigma_E e^{-\beta E}$". $\beta$ is an inverse temperature (a reciprocal of a temperature).

The canonical statistical ensemble may be efficiently generated by a minimally entangled typical thermal state (METTS) algorithm. In a case where the classical computer 100 generates the canonical statistical ensemble by the METTS algorithm, processing is performed in the following procedure. 1. The classical computer 100 selects an input state from the computational bases. 2. The classical computer 100 executes an imaginary-time evolution algorithm to implement the Boltzmann weight. 3. The classical computer 100 calculates an expectation value of a physical quantity desired to be obtained. 4. In order to generate a probability distribution according to the Boltzmann weight, the classical computer 100 calculates a probability distribution corresponding to projective measurement in the computational basis of an output state. 5. The classical computer 100 repeats 2. to 4., with a state probabilistically selected according to the probability distribution obtained in 4. as the next input state.

The ensemble of the quantum states used as the input state in the repetition of 2. to 4. constitutes the canonical statistical ensemble. In other word, in the case of the METTS algorithm, the canonical statistical ensemble is automatically generated in the process of calculating the expectation value of the physical quantity.

Such a METTS algorithm is a calculation method assumed to be executed only by the classical computer 100, but the quantum calculation system 300 may execute a method referred to as quantum METTS (QMETTS) equivalent to the METTS algorithm.

Also in the QMETTS, imaginary-time evolution is performed to implement the Boltzmann weight. There are various methods for quantum imaginary-time evolution that implements the imaginary-time evolution in the quantum computer 200.

Examples of a possible quantum imaginary-time evolution method in a noisy intermediate scale quantum computer (NISQ) include variational imaginary-time evolution, imaginary-time evolution in a narrow sense, probabilistic imaginary-time evolution, and the like. The variational imaginary-time evolution is a method of variationally optimizing parameters of a quantum circuit so as to reproduce the imaginary-time evolution. The imaginary-time evolution in a narrow sense is a method of determining coefficients of simple quantum gates from equations so as to reproduce the imaginary-time evolution. The probabilistic imaginary-time evolution is a method of post-selecting only events in which ancilla qubits satisfy specific conditions.

Examples of an effective quantum imaginary-time evolution method in a fault tolerant quantum computer (FTQC) include a method based on a quantum singular value transformation algorithm, a method based on linear combination of unitaries (LCU), and the like. The method based on the quantum singular value transformation algorithm is a method of approximately implementing the imaginary-time evolution by polynomial transformation of an eigenvalue of a Hamiltonian. The LCU is a method of performing polynomial expansion of the imaginary-time evolution, expressing a polynomial of each order by a quantum circuit, and obtaining linear combination of all the quantum circuits. The LCU may also be implemented with a relatively small-scale early-FTQC device.

In the quantum calculation system 300 according to the second embodiment, the thermal equilibrium expectation value at the finite temperature of the physical quantity of the quantum system is calculated by the QMETTS with the imaginary-time evolution by the LCU. A quantum circuit for the imaginary-time evolution may be executed by being divided into a plurality of partial circuits having a small number of qubits to be used, and is compatible with the early-FTQC devices.

FIG. 4 is a diagram illustrating a first example (first implementation method) of a quantum circuit for implementing the LCU. In a quantum circuit 30, gate operations for a plurality of qubits representing a state | $\Psi$> of a target system and ancilla qubits (each of the qubits having an initial state of | 0>) are indicated.

In the qubits of the target system, unitary gates 33a, 33b, ..., 33k corresponding to polynomials for the respective orders when the imaginary-time evolution is subjected to polynomial expansion are arranged. A gate operation of a predetermined unitary gate 31 is performed on the ancilla qubits.

Each of the unitary gates 33a, 33b, ..., 33k of the target system is a gate that is caused to be acted in a case where each ancilla qubit is a control qubit and a state of the control qubit satisfies a predetermined condition. The ancilla qubits to be the control qubits of the respective unitary gates 33a, 33b, ..., 33k are indicated by white circles or black circles. The white circle indicates a negative polarity, and indicates that a gate operation on the target qubits (the qubits of the target system) is acted when the state is "0". The black circle indicates a positive polarity, and indicates that the gate operation on the target qubit (the qubit of the target system) is acted when the state is "1".

For each of the unitary gates 33a, 33b, ..., 33k, in a case where the states of all the control qubits are in the states where the gate operation is acted, the gate operation is performed on the qubits of the target system according to the corresponding unitary gate.

After the gate operations of the unitary gates 33a, 33b, ..., 33k, a gate operation of a unitary gate 32 is performed on the ancilla qubits.

The quantum circuit 30 implements calculation in which quantum circuits of the respective components after the polynomial expansion are sequentially acted in a form of control unitary to be subjected to linear combination. In the quantum circuit 30, a large number of ancilla qubits are used in addition to the qubits of the target system to be operated by the unitary gates 33a, 33b, ..., 33k. Therefore, the number of qubits to be used increases.

FIG. 5 is a diagram illustrating a second example (second implementation method) of the quantum circuit for implementing the LCU. A partial circuit 40 is a simplified quantum circuit obtained by extracting gate operations corresponding to a set of two orders among orders obtained by polynomial expansion of an imaginary-time evolution expression. In the partial circuit 40, one ancilla qubit is used. First, a gate operation of a Hadamard gate 41 is performed on the ancilla qubit.

In a case where a state of the ancilla qubit defined as a superposed state is | 0> after applying the Hadamard gate 41, a gate operation of a unitary gate 43a corresponding to a polynomial of one of the two orders selected for qubits of a target system is performed. Next, in a case where the state of the ancilla qubit is | 1>, a gate operation of a unitary gate 43b corresponding to a polynomial of the other one of the two orders selected for the qubits of the target system is performed. After the two unitary gates 43a and 43b, a gate operation of a Hadamard gate 42 is performed on the ancilla qubit.

By using the partial circuit 40, the quantum circuit of the two components is extracted, the simplified partial circuit is acted, and then a physical quantity is calculated, and linear combination of measurement results may be calculated later by the classical computer 100.

As illustrated in FIGs. 4 and 5, the LCU has the two implementation systems. These implementation systems have advantages and disadvantages in terms of performance, load due to implementation resources, and the like. Therefore, the appropriate implementation system is used in consideration of the advantages and the disadvantages. Particularly, in implementation of the quantum imaginary-time evolution, there are the following differences between the first implementation method (coherent superposition of all the orders) illustrated in FIG. 4 and the second implementation method (extraction of contribution of the two orders) illustrated in FIG. 5.

[Suitable Quantum Computing Machine]

In the first implementation method, execution in the large-scale FTQC device is needed. On the other hand, in the second implementation method, implementation in the relatively small-scale FTQC device (early-FTQC device) is also possible.

[Depth of Circuit]

In the first implementation method, a depth of the circuit is a sum total of depths of the respective unitary gates of all the orders, and the depth of the entire circuit is deep. On the other hand, in the second implementation method, a depth of the circuit is a sum of depths of the unitary gates of the extracted two orders, and the depth of the circuit is shallower than that in the first implementation method.

[Implementation Resources]

In the first implementation method, a large number of non-Clifford gates are used, and a large number of hardware resources are used (resource requirements are stringent). On the other hand, in the second implementation method, the number of non-Clifford gates is relatively small, and the number of hardware resources is small as compared with the first implementation method (resource requirements are moderate).

[The Number of Quantum Circuits]

In the first implementation method, one quantum circuit is used, but in the second implementation method, quantum circuits as many as the number of sets of orders to be extracted are used. In a case where the plurality of quantum circuits is used as in the second implementation method, the quantum calculation based on the quantum circuits may also be executed in parallel processing.

[Method of Implementing Linear Combination]

In the first implementation method, the linear combination is implemented by coherent superposition. On the other hand, in the second implementation method, the results of the respective partial circuits are summed up by the classical computer 100, thereby implementing the linear combination.

[Output State]

In the first implementation method, the state after the imaginary-time evolution is output. In the second implementation method, the state to which a part of the imaginary-time evolution is applied is output.

[Compatibility with QMETTS]

In the first implementation method, the thermal equilibrium state is generated by the projective measurement, and thus, the first implementation method is compatible with the QMETTS. In the second implementation method, the thermal equilibrium state is not generated even when the projective measurement is performed, and thus, the second implementation method is not compatible with the QMETTS.

The differences between the first implementation method and the second implementation method are as described above. Here, it takes time in units of several decades to implement the large-scale FTQC device. Therefore, it is realistic to first implement the second implementation method that may be implemented even with the relatively small-scale FTQC device.

In the second implementation method, since the output state of the quantum circuit is not the state itself after the imaginary-time evolution, the thermal equilibrium state is not generated even when the projective measurement is performed in a manner of the QMETTS. In order to calculate the thermal equilibrium expectation value of the physical quantity by the second implementation method, an enormous number of states are randomly sampled from a large number of states exponentially for a size of a system and calculated for each sample, and calculation efficiency is poor.

Here, it is noted that it is not essential to generate the canonical statistical ensemble describing the thermal equilibrium state itself in order to calculate the thermal equilibrium expectation value of the physical quantity at the finite temperature. Thus, in the quantum calculation system 300, the second implementation method described above is improved, and by efficiently generating, for each partial circuit from which contribution of a set of two orders is extracted, a statistical ensemble suitable for the partial circuit, a value indicating contribution of the partial circuit is obtained.

FIG. 6 is a diagram illustrating an example of an efficient calculation method of the thermal equilibrium expectation value of the physical quantity at the finite temperature. In the quantum calculation system 300, the classical computer 100 performs polynomial expansion of the imaginary-time evolution to obtain a polynomial for each order. The polynomial for each order is represented by unitary matrices $U_1$, $U_2$, $U_3$, $U_4$, $U_5$, $U_6$, ....

The classical computer 100 extracts a plurality of sets of two orders among a plurality of orders of an expansion destination by the polynomial expansion. Then, the classical computer 100 generates partial circuits 51, 52, 53, ... for each set of orders.

In the partial circuit 51, gate operations for a plurality of qubits representing a target system and one ancilla qubit are indicated. An input state of the plurality of qubits representing the target system is defined as $|\psi\rangle$, and an input state of the ancilla qubit is defined as $|0\rangle$.

In the partial circuit 51, first, a Hadamard gate 51a is arranged in the ancilla qubit. Next, a unitary gate 51b that is controlled with the ancilla qubit as a control qubit indicating a negative polarity is arranged in the qubits of the target system. Moreover, a unitary gate 51c that is controlled with the ancilla qubit as a control qubit indicating a positive polarity is arranged in the qubits of the target system. The two unitary gates 51b and 51c are quantum circuits that correspond to the respective orders of the extracted two orders and cause the quantum computer 200 to calculate the polynomials of the corresponding orders.

Next to the unitary gate 51c, a Hadamard gate 51d is arranged in the ancilla qubit. Additionally, in the partial circuit 51, measurement 51e and measurement 51f of the respective states of the ancilla qubit and the qubits of the target system are indicated.

Also in the partial circuit 52, a Hadamard gate 52a for the ancilla qubit, two unitary gates 52b and 52c for the qubits representing the state of the target system, and a Hadamard gate 52d for the ancilla qubit are arranged. Additionally, in the partial circuit 52, measurement 52e and measurement 52f of the respective states of the ancilla qubit and the qubits of the target system are indicated.

Also in the partial circuit 53, a Hadamard gate 53a for the ancilla qubit, two unitary gates 53b and 53c for the qubit representing the state of the target system, and a Hadamard gate 53d for the ancilla qubit are arranged. Additionally, in the partial circuit 53, measurement 53e and measurement 53f of the respective states of the ancilla qubit and the qubits of the target system are indicated.

The classical computer 100 causes the quantum computer 200 to repeatedly execute quantum calculation corresponding to the partial circuits 51, 52, 53, ... corresponding to the respective sets of orders until a physical quantity obtained from a measurement result converges. In a case where the physical quantity does not converge, the classical computer 100 causes the quantum computer 200 to execute projective measurement in the computational basis of an output state of the qubits of the target system, and sets a measurement result as an input state in quantum calculation of the next iterative step.

By setting the result of the projective measurement of the output state as the input state in the next step in this manner, a statistical ensemble suitable for quantum calculation corresponding to the set of the extracted orders is generated as the input state. For example, the input state of the partial circuit 51 is a statistical ensemble suitable for calculation of the unitary matrices $U_1$ and $U_2$ corresponding to the respective extracted orders. The input state of the partial circuit 52 is a statistical ensemble suitable for calculation of the unitary matrices $U_3$ and $U_4$ corresponding to the respective extracted orders. The input state of the partial circuit 53 is a statistical ensemble suitable for calculation of the unitary matrices $U_5$ and $U_6$ corresponding to the respective extracted orders.

The classical computer 100 calculates the thermal equilibrium expectation value at the finite temperature based on the physical quantity at the time of convergence of each of the partial circuits 51, 52, 53, .... In this manner, the calculation of the thermal equilibrium expectation value at the finite temperature is performed by efficiently automatically generating the input state to be the appropriate statistical ensemble.

Hereinafter, a principle of the calculation method illustrated in FIG. 6 will be described.

Although an entire action of each of the partial circuits 51, 52, 53, ... illustrated in FIG. 6 is complicated, a basic symmetry referred to as the Hermitian property is exhibited under a certain condition. Having the Hermitian property means that a matrix representing an operation is equal to a Hermitian conjugate of the matrix. By using this Hermitian property, the measurement result for the output state is linked to the generation of the statistical ensemble.

FIG. 7 is a diagram illustrating an example of the condition under which the partial circuit exhibits the Hermitian property. Each of unitary gates 61 and 62 included in a partial circuit 60 constitutes an LCU having a smaller scale. In other word, the partial circuit 60 has the LCU having a double structure.

Similarly to the quantum circuit 30 illustrated in FIG. 4, the LCU of the one unitary gate 61 indicates gate operations for a plurality of ancilla qubits and qubits of a target system. A plurality of unitary gates 61a, 61b, ..., 61k is arranged for the qubits of the target system. Quantum calculation of a Hamiltonian of the target system is expressed by these unitary gates 61a, 61b, ..., 61k. These unitary gates 61a, 61b, ..., 61k correspond to the respective terms of the Hamiltonian. Each of the unitary gates 61a, 61b, ..., 61k is a quantum circuit for causing the quantum computer 200 to execute calculation of the corresponding term.

The partial circuit 60 exhibits the Hermitian property by performing appropriate conditioning on states of the ancilla qubits constituting the LCUs inside the unitary gates 61 and 62. A condition of the states of the ancilla qubits for the exhibition of the Hermitian property is to select only an event in which input and output are all | 0> states for all the ancilla qubits constituting the LCUs inside the unitary gates 61 and 62.

An expectation value of a physical quantity O regarding the statistical ensemble introduced by the calculation method illustrated in FIG. 6 is given by the following Expression (1).

[Expression 1]

$$\langle O\rangle_{ab}^{k} = \sum\nolimits_i \left(\frac{W_{ab}^{ik}}{\sum_j W_{ab}^{jk}}\right)\langle\Phi_{ab}^{ik}|O|\Phi_{ab}^{ik}\rangle \qquad (1)$$

Expression (1) expresses contribution of a partial circuit including unitary gates $U_a$ and $U_b$ corresponding to the respective two orders a and b (a and b are integers of 0 or more). $|\Phi_{ab}^{ik}\rangle$ is obtained by normalizing a state (state of the target system) obtained as a result of post-selecting an event in which $k \in \{0, 1\}$ is obtained by performing projective measurement of the ancilla qubits in the computational basis after the partial circuit is caused to act with the input state of the target system as | i>. $W_{ab}^{ik}$ is a probability that $|\Phi_{ab}^{ik}\rangle$ is obtained as a result of the measurement.

An average of statistical ensembles obtained by calculation of the partial circuit is an expectation value regarding a statistical ensemble such that $|\Phi_{ab}^{ik}\rangle$ is obtained with a probability "$W_{ab}^{ik}/\Sigma_j W_{ab}^{jk}$".

Next, the polynomial expansion of the imaginary-time evolution will be described in detail.

For the expansion of the imaginary-time evolution, for example, a Chebyshev polynomial $T_n(x)$ may be used. n is an integer indicating an order. x is an argument of a polynomial, and in the present case, a Hamiltonian H is substituted. The Chebyshev polynomial is a best approximation polynomial, which approximates a function with the best precision for arguments within a finite interval. A concrete form of the expansion is given by the following Expression (2).

[Expression 2]

$$e^{-\beta H} = \sum_n c_n(\beta)\, T_n(H) \qquad (2)$$

Here, an expansion coefficient $c_n(\beta)$ is a modified Bessel function of the first kind. A finite temperature expectation value $\langle O\rangle_\beta$ of a physical quantity is expanded as in Expression (3).

[Expression 3]

$$\langle O\rangle_\beta = \frac{\sum_{mni} c_m\left(\frac{\beta}{2}\right) c_n\left(\frac{\beta}{2}\right)\langle i|T_m(H)OT_n(H)|i\rangle}{\sum_{mni} c_m\left(\frac{\beta}{2}\right) c_n\left(\frac{\beta}{2}\right)\langle i|T_m(H)T_n(H)|i\rangle} \quad (3)$$

m and n are integers indicating orders. As described above, the polynomial expansion of the imaginary-time evolution becomes possible. Here, among the two selected orders (m, n), the unitary gate corresponding to an mth-order polynomial is defined as $U_a$, and the unitary gate corresponding to an nth-order polynomial is defined as $U_b$. In this case, $<O>_{ab}{}^k$ indicated in Expression (1) is obtained from a measurement result of a partial circuit corresponding to a set of the selected two orders (m, n). $<O>_{ab}{}^k$ and Expression (3) have the following relationship.

[Expression 4]

$$\sum_i(\langle i|T_m(H)OT_n(H)|i\rangle + \langle i|T_n(H)OT_m(H)|i\rangle) = \left(\sum_j W_{ab}^{j0}\right)\langle O\rangle_{ab}^0 - \left(\sum_j W_{ab}^{j1}\right)\langle O\rangle_{ab}^1 \quad (4)$$

Extraction of the set of two orders from the polynomial expansion is performed, for example, as follows.

In the polynomial expansion of the finite temperature expectation value of the physical quantity, the set of two orders (m, n) is extracted in order from a low-order set having large contribution.

In a case where a truncation order of the expansion is small, the total number of generatable sets of orders is limited. In this case, all generatable sets of orders may be comprehensively extracted.

In a case where the truncation order of the expansion is large, the total number of generatable sets of orders becomes enormous. In this case, it is sufficient that only a low-order set having large contribution is extracted. Particularly, when a set of orders is probabilistically extracted according to a probability distribution proportional to an absolute value of an expansion coefficient "$c_m(\beta/2)c_n(\beta/2)$", the thermal equilibrium expectation value is correctly obtained.

Partial circuits expressing the respective sets of extracted orders may be subjected to parallel processing independently. For example, in a case where the number of qubits of the quantum computer 200 is sufficient, the qubits may be divided into a plurality of groups, and the partial circuit may be executed for each group.

Next, functions of the quantum calculation system 300 for calculating the finite temperature expectation value of the physical quantity will be described.

FIG. 8 is a block diagram illustrating an example of the functions of the quantum calculation system. The quantum computer 200 includes a quantum device 210 and a measurement device 220. The quantum device 210 is a circuit that constitutes a plurality of qubits. The quantum device 210 is, for example, a superconducting quantum device or a quantum device of trapped-ion system. The quantum device 210 performs a gate operation on the qubit according to a gate operation instruction from the classical computer 100.

The measurement device 220 is a device that measures a state of a qubit in the quantum device 210. For example, the measurement device 220 performs, for example, projective measurement in the computational basis (Z basis) of the qubit.

The classical computer 100 includes a quantum device control unit 110, a measurement result statistical processing unit 120, a calculation result storage unit 130, and a weighted average calculation unit 140.

The quantum device control unit 110 controls the quantum device 210 based on a quantum circuit indicating a procedure of quantum calculation. For example, the quantum device control unit 110 controls the quantum device 210 according to a quantum circuit (partial circuit for each set of orders obtained by polynomial expansion of imaginary-time evolution) for calculating a finite temperature expectation value of a physical quantity.

The measurement result statistical processing unit 120 performs statistical processing of a measurement result of a quantum circuit. For example, the measurement result statistical processing unit 120 calculates an average or a standard deviation of measurement results obtained by a plurality of times of measurement, and determines whether the measurement results have converged.

The calculation result storage unit 130 stores a calculation result of a physical quantity calculated for each partial circuit. The calculation result storage unit 130 is, for example, a part of a storage area of the memory 102 or the storage device 103.

The weighted average calculation unit 140 calculates a weighted average of calculation results for the respective partial circuits. The weighted average calculation unit 140 outputs the calculated weighted average as a finite temperature expectation value.

The calculation of the finite temperature expectation value is efficiently performed by the quantum calculation system 300 having such functions.

Note that the function of each element illustrated in FIG. 8 may be implemented by, for example, causing the processor 101 to execute a program module corresponding to the element.

FIG. 9 is a flowchart illustrating an example of a calculation procedure of the finite temperature expectation value. Hereinafter, processing illustrated in FIG. 9 will be described in line with step numbers.

[Step S101] The quantum device control unit 110 of the classical computer 100 receives input of the number of qubits N of a target system, the Hamiltonian H, an inverse temperature β, a truncation order M of polynomial expansion, and the number of sets of orders of polynomials to be extracted M (with ~).

[Step S102] The classical computer 100 repeats processing of steps S103 to S111 while counting up a value of m until a loop variable m changes from "0" to "M - 1" (M is with ~).

[Step S103] The quantum device control unit 110 generates a partial circuit corresponding to a set of two orders extracted from a plurality of orders for generating polynomials by polynomial expansion of imaginary-time evolution. For example, the quantum device control unit 110 performs the polynomial expansion of an imaginary-time evolution expression up to the truncation order M. As a result, the respective polynomials from a zeroth order to an Mth order are generated. The quantum device control unit 110 extracts a set from sets of two orders that may be extracted from the orders of the zeroth order to the Mth order. This processing is repeated M (with ~) times to generate M (with ~) sets of orders.

The quantum device control unit 110 generates a partial circuit corresponding to the extracted set of orders. For example, the quantum device control unit 110 generates unitary gates indicating a procedure of quantum calculation of polynomials corresponding to the respective orders included in the set. The number of qubits operated by the generated unitary gates is N. Then, the quantum device control unit 110 generates a partial circuit including two unitary gates corresponding to the set of orders as illustrated in FIG. 6.

[Step S104] The quantum device control unit 110 repeatedly executes processing of step S105 for a predetermined number of shots (the number of times of repetition) for the generated partial circuit.

[Step S105] The quantum device control unit 110 instructs the quantum computer 200 to perform gate operations and measurement according to the generated partial circuit. For example, the quantum device control unit 110 transmits control signals for the gate operations and the measurement to the quantum device 210 in order illustrated in the partial circuit.

Note that the quantum device control unit 110 sets an input state at the time of first physical quantity calculation by the generated partial circuit as a preset input state. At the time of second and subsequent physical quantity calculation, the quantum device control unit 110 sets a state updated in step S111 described later as the input state of the generated partial circuit.

The quantum device 210 performs the gate operations on qubits according to the control signal from the quantum device control unit 110. When the gate operations corresponding to the partial circuit is completed, the measurement device 220 measures states of the qubits of the target system and the ancilla qubit. The measurement device 220 transmits a measurement result to the classical computer 100. In the classical computer 100, the measurement result statistical processing unit 120 receives the measurement result.

[Step S106] In a case where the instruction of the quantum gate operations and the measurement in step S105 is completed for the number of times of the predetermined number of shots, the quantum device control unit 110 advances the processing to step S107.

[Step S107] Based on the measurement results for the number of shots, the measurement result statistical processing unit 120 calculates a physical quantity ( $\langle \Phi_{\mathrm{ab}}^{ik} | O | \Phi_{\mathrm{ab}}^{ik} \rangle$ in Expression (1)) obtained from the measurement results of the generated partial circuit. The measurement result statistical processing unit 120 adds the calculated physical quantity to an array $r_m$.

[Step S108] The measurement result statistical processing unit 120 calculates an average of values in the array $r_m$.

[Step S109] The measurement result statistical processing unit 120 determines whether or not the physical quantity obtained by the quantum calculation of the generated partial circuit has converged. For example, in a case where a change in the average calculated in step S108 is equal to or less than a predetermined value, the measurement result statistical processing unit 120 determines that the physical quantity has converged. Furthermore, in a case where a standard deviation of the values of the array $r_m$ is equal to or less than a predetermined value, the measurement result statistical processing unit 120 may determine that the physical quantity has converged. In a case where the physical quantity has converged, the measurement result statistical processing unit 120 advances the processing to step S112. Furthermore, in a case where the physical quantity has not converged, the measurement result statistical processing unit 120 advances the processing to step S110.

[Step S110] The quantum device control unit 110 instructs the quantum computer 200 to perform quantum gate operations and projective measurement in the computational basis based on the generated partial circuits. The input state of the qubits of the target system at this time is the input state at the time of the quantum calculation for the immediately preceding physical quantity calculation (quantum gate operations in step S105).

In the quantum computer 200, the gate operations are performed on the quantum device 210 according to the instruction from the quantum device control unit 110. Then, the measurement device 220 performs the projective measurement in the computational basis of the qubits of the target system after the gate operations according to the partial circuit. The measurement device 220 transmits a measurement result to the classical computer 100.

[Step S111] The quantum device control unit 110 updates the input state based on the measurement result acquired in step S110. For example, the quantum device control unit 110 sets the measurement result ( | 0> or | 1>) of each qubit of the target system as an input state in the next physical quantity calculation. Thereafter, the quantum device control unit 110 advances the processing to step S104.

As a result, the measurement outcome of the projective measurement of the output state becomes the input state of the qubits of the target system of the quantum calculation for the next physical quantity calculation. Then, such update of the input state is repeated until the calculated physical quantity converges.

[Step S112] When the physical quantity converges, the measurement result statistical processing unit 120 stores the average value calculated in step S108 in an array Avg in the calculation result storage unit 130.

[Step S113] In a case where the processing of steps S103 to S112 is ended for the M (with ~) sets of orders, the quantum device control unit 110 advances the processing to step S114.

[Step S114] The weighted average calculation unit 140 calculates a weighted average of contribution of the partial circuit. For example, the weighted average calculation unit 140 calculates $<O>_\beta$ according to Expression (3). The weighted average calculation unit 140 outputs a calculation result of the weighted average as a finite temperature expectation value.

In this manner, the finite temperature expectation value of the physical quantity may be calculated based on the calculation result of the quantum calculation according to the plurality of partial circuits by the quantum computer 200. Since a scale of the partial circuit is smaller than that of the quantum circuit 30 illustrated in FIG. 4, the partial circuit may be executed even with the early-FTQC device. Furthermore, a circuit depth of the partial circuit is also shallower.

Moreover, in the repetitive calculation of the physical quantity until the physical quantity converges using the partial circuit, the classical computer 100 sets the result of the projective measurement in the computational basis of the output state after the quantum calculation by the partial circuit as the input state in the next physical quantity calculation. As a result, the input state to the partial circuit becomes a statistical ensemble suitable for the partial circuit.

Obtaining the statistical ensemble suitable for the partial circuit specifically means that " $|\Phi_{ab}^{ik}>$" is obtained according to the probability distribution "$W_{ab}^{ik}/\Sigma W_{ab}^{jk}$". In order to efficiently obtain such a statistical ensemble, the state obtained as the projective measurement result in the computational basis of the output state of the partial circuit is used as the next input state. This means that, in the repetition cycle of "1. selection of the input state", "2. imaginary-time evolution", "3. measurement of the physical quantity", and "4. measurement of the output state", the measurement result of "4. measurement of the output state" becomes the input state of the next cycle. This is similar processing as the METTS algorithm, and the input state in the repetition cycle probabilistically transitions, and a stationary distribution obtained as a convergence destination thereof becomes a statistical ensemble suitable for the partial circuit.

Note that the action of each partial circuit is partial contribution of the imaginary-time evolution represented by the polynomials corresponding to the set of extracted orders. Additionally, the physical quantity after convergence of each partial circuit indicates contribution of the partial circuit in the thermal equilibrium expectation value of the physical quantity of the target system. Therefore, the final thermal equilibrium expectation value of the physical quantity of the target system is obtained by the weighted average of the calculation results of the physical quantities by the respective plurality of partial circuits.

Next, a calculation example of a thermal equilibrium expectation value of a physical quantity using a transverse-field Ising model will be specifically described.

FIG. 10 is a diagram illustrating an example of the Ising model. An Ising model 70 is a theoretical model that describes quantum-mechanical behavior of a magnetic body. In the Ising model 70, sites 71 to 73 are provided on lattice points. Spins are defined in the sites 71 to 73. Interaction acts between adjacent spins. Using the Ising model 70, directions of the spins of the sites 71 to 73 when a transverse magnetic field is applied may be calculated by numerical simulation.

For example, the Hamiltonian H of the Ising model 70 is represented by the following Expression (5).

[Expression 5]

$$H = J\sum_{\langle i,j\rangle} X_i X_j + h\sum_i Z_i \qquad (5)$$

$X_i$ is a Pauli operator describing an X-direction component of a spin at an ith (i is a natural number) site. $X_j$ is a Pauli operator describing an X-direction component of a spin at a jth (j is a natural number) site. $Z_i$ is a Pauli operator describing a Z-direction component of the spin at the ith site. J is a parameter (real number) indicating the Ising interaction. h is a parameter (real number) indicating the transverse magnetic field.

By representing a target system by the Ising model 70, a thermal equilibrium expectation value of energy of the target system may be obtained. For example, the thermal equilibrium expectation value of the energy is obtained as a canonical average of eigenvalues of the Hamiltonian H of the Ising model 70.

Here, it is assumed that the target system is a two-qubit system. A coefficient of the Hamiltonian is set as follows. J = 0.96 h = 0.02

It is assumed that a truncation order of Chebyshev polynomial expansion is a third order. The Chebyshev polynomial expansion up to the third order for the Hamiltonian H of the transverse-field Ising model is represented by the following Expression (6).

[Expression 6]

$$\begin{aligned} e^{-\beta H} &\cong J_0(i\beta)I + 2\sum_{n=1}^{3} i^n J_n(-i\beta)T_n(-H) \\ &= J_0(i\beta)I - 2iJ_1(-i\beta)H + 2i^2J_2(-i\beta)(2H^2 - I) \\ &\quad -2i^3J_3(-i\beta)(4H^3 - 3H) \end{aligned} \tag{6}$$

A first term, a second term, a third term, and a fourth term of a polynomial after the expansion of Expression (6) are a zeroth-order expression, a first-order expression, a second-order expression, and a third-order expression, respectively. Here, an expansion coefficient is represented by using a Bessel function of the first kind $J_n(x)$ (n is an order). Specifically, the expansion coefficient takes the following value.

[Expression 7]

$$\begin{aligned} 2(-i)^n J_n(-i\beta) &= 2(-i)^n \sum_{m=0}^{\infty} \frac{(-1)^m}{m!\cdot(m+n)!}\left(\frac{-i\beta}{2}\right)^{2m+n} \\ &= 2(-1)^n \sum_{m=0}^{\infty} \frac{1}{m!\cdot(m+n)!}\left(\frac{\beta}{2}\right)^{2m+n} \end{aligned} \tag{7}$$

"$(-i)^n J_n(-i\beta)$" indicated on a left-hand side of Expression (7) is referred to as a modified Bessel function of the first kind.

As an example of a method of extracting a set of two orders, a method of comprehensively selecting all combinations is conceivable. In a case where the truncation order is 3, there are the following 16 combinations of orders that may be extracted.

(0, 0), (0, 1), (0, 2), (0, 3)
(1, 0), (1, 1), (1, 2), (1, 3)
(2, 0), (2, 1), (2, 2), (2, 3)
(3, 0), (3, 1), (3, 2), (3, 3)

A numerical value in parentheses described above indicates an extracted order. In generation of a partial circuit corresponding to the set of orders, for example, a unitary gate corresponding to an order indicated on a left side in the parentheses is arranged first (the unitary gate 61 in FIG. 7), and a unitary gate corresponding to an order indicated on a right side in the parentheses is arranged second (the unitary gate 62 in FIG. 7).

Among the sets of orders that may be extracted, a set of (0, 0) corresponds to a case where no action is performed, and thus, it is unnecessary to generate a corresponding partial circuit. When the ideal quantum computer 200 in which errors are completely removed, for the respective sets in which order is reversed such as (m, n) and (n, m), partial circuits thereof are equivalent to each other. Therefore, when the errors may be completely removed, it is sufficient that only one set of (m, n) and (n, m) is extracted to generate a corresponding partial circuit. Also in the following example, it is assumed that only one set of (m, n) and (n, m) is extracted. As a result, there are the following nine sets of orders to be extracted.

(0, 1), (0, 2), (0, 3)
(1, 1), (1, 2), (1, 3)
(2, 2), (2, 3)
(3, 3)

Precision for convergence determination is set to "0.5". In other words, the classical computer 100 determines that convergence has occurred when a standard deviation of a statistical ensemble average of measured values of a physical quantity falls below "0.5". Finally, the classical computer 100 calculates linear combination using the expansion coefficient to calculate a finite temperature expectation value.

The calculation result of the thermal equilibrium expectation value of the energy under the conditions described above will be described with reference to FIGs. 11 and 12.

FIG. 11 is a diagram illustrating an example of a comparison result of calculation precision of the thermal equilibrium expectation value of the energy. A graph 80 illustrated in FIG. 11 indicates an error from an exact value of the calculation result of the thermal equilibrium expectation value of the energy corresponding to an inverse temperature. In the graph 80, a horizontal axis represents the inverse temperature, and a vertical axis represents the error from the exact value. A polygonal line 81 indicates the thermal equilibrium expectation value of the energy calculated by the proposed method of the present case. A polygonal line 82 indicates the thermal equilibrium expectation value of the energy calculated by a QMETTS algorithm. A polygonal line 83 indicates the thermal equilibrium expectation value of the energy calculated by uniformly sampling an input state to a partial circuit without using the present proposed method.

A canonical average indicating the exact value is a value obtained by substituting an energy eigenvalue obtained by exact diagonalization of a Hamiltonian into an expression of the canonical average after displaying the Hamiltonian as a matrix. In the present proposed method indicated by the polygonal line 81, substantially the same precision as that of the QMETTS algorithm indicated by the polygonal line 82 is obtained. Note that, in the present proposed method, the circuit depth is 1/3 as compared with that of the QMETTS algorithm, and the number of non-Clifford gates is minimized. Moreover, with the present proposed method, the calculation result with the precision higher by one digit or more than that in a case where the input state is uniformly sampled (polygonal line 83) may be obtained.

FIG. 12 is a diagram illustrating an example of a comparison result of calculation efficiency of the thermal equilibrium expectation value of the energy. A graph 90 illustrated in FIG. 12 indicates the calculation efficiency of the thermal equilibrium expectation value of the energy corresponding to the inverse temperature. In the graph 90, a horizontal axis represents the inverse temperature, and a vertical axis represents the number of samples of a quantum state (input state to a partial circuit) until the thermal equilibrium expectation value of the energy converges.

A polygonal line 91 indicates the total number of samples for each partial circuit when the thermal equilibrium expectation value of the energy is calculated by the proposed method of the present case. A polygonal line 92 indicates a maximum value of the number of samples for each partial circuit when the thermal equilibrium expectation value of the energy is calculated by the proposed method of the present case. A polygonal line 93 indicates the number of samples when the thermal equilibrium expectation value of the energy is calculated by the QMETTS algorithm. A polygonal line 94 indicates the number of samples when the thermal equilibrium expectation value of the energy is calculated by uniformly sampling the input state to the partial circuit without using the present proposed method.

The total number of samples for each partial circuit by the present proposed method (polygonal line 91) is nearly two digits smaller in the number of samples than that in a case where the input state for each partial circuit is uniformly sampled (polygonal line 94). Furthermore, in the total number of samples for each partial circuit by the present proposed method (polygonal line 91), an increase in the number of samples is suppressed to about one digit as compared with that of the QMETTS algorithm (polygonal line 93) using the first implementation method of the LCU (see FIG. 4) for implementation of the imaginary-time evolution.

Note that, in the examples illustrated in FIGs. 11 and 12, the ideal situation where the errors are completely removed is assumed. However, in a case where the removal of the errors is incomplete, both sets of (m, n) and (n, m) in which the extraction order is reversed may be extracted in the extraction of the set of orders, and partial circuits corresponding the respective sets may be generated. This further improves calculation precision.

As described above, according to the second embodiment, the thermal equilibrium expectation value at the finite temperature of the physical quantity may be efficiently calculated with high precision. Moreover, since the quantum circuit is calculated by being divided into the partial circuits, the implementation is possible even in the small-scale quantum computer 200. Moreover, by executing the plurality of partial circuits in parallel, calculation may be made efficient.

For example, in the calculation of the thermal equilibrium expectation value at the finite temperature of the energy in the transverse-field Ising model, it is possible to also suppress the increase in the number of samples until the expectation value converges while reducing the depth of the quantum circuit to half or less. Therefore, the implementation resources such as the circuit depth may be reduced as compared with the existing method without deteriorating efficiency.

As such, in calculating the thermal equilibrium expectation value of the physical quantity at the finite temperature, the efficiency of using computer hardware such as memory and processors is improved. For example, the number of loop process executions from S104 to S111 required to converge the physical quantity may be reduced, resulting in lower memory consumption.

[Other Embodiments]

In the second embodiment, the calculation example of the thermal equilibrium expectation value of the energy by the transverse-field Ising model has been described as an example. However, calculation of a thermal equilibrium expectation value at a finite temperature of another physical quantity may also be efficiently implemented.

## Claims

1. A quantum calculation support program comprising instructions which, when executed by a computer coupled to a quantum computer, cause the computer to execute processing comprising:

   expanding an imaginary-time evolution expression into a plurality of expressions, the imaginary-time evolution expression being an expression for calculation of a thermal equilibrium expectation value at a finite temperature of a physical quantity of a system to be calculated, each of the plurality of expressions being an expression of a corresponding order among a plurality of orders;
   generating a plurality of sets of orders, each of which is obtained by extracting an order twice from the plurality of orders;
   generating, for each set of the generated sets, a quantum circuit that indicates a procedure of quantum calculation of a value of the physical quantity obtained by partial imaginary-time evolution using an expression of a first order included in the set and an expression of a second order included in the set, each of the first and second orders being any of the plurality of orders;
   causing the quantum computer to repeatedly execute, for each set of the generated sets, the quantum calculation using the quantum circuit generated for the set until a value of the physical quantity obtained from a result of the quantum calculation converges in a manner that an output state obtained by the quantum calculation according to the quantum circuit corresponding to the set is used as an input state in the subsequent quantum calculation; and
   calculating the thermal equilibrium expectation value at the finite temperature of the physical quantity based on a value of the physical quantity after convergence for each of the generated sets.

2. The quantum calculation support program according to claim 1, wherein,
   the repeatedly executing of the quantum calculation is performed in a manner that a projective measurement result in the computational basis of an output state obtained by the quantum calculation using an input state in Nth (N is a natural number) quantum calculation is set as an input state in (N + 1)th quantum calculation.

3. The quantum calculation support program according to claim 1, wherein,
   the generating of the quantum circuit includes generating the quantum circuit that has a Hermitian property under certain conditions on the ancilla states, the generated quantum circuit including a first unitary gate that indicates calculation of a unitary matrix that corresponds to the expression of the first order and a second unitary gate that indicates calculation of a unitary matrix that corresponds to the expression of the second order.

4. The quantum calculation support program according to claim 1, wherein,
   the generating of the plurality of sets of orders is performed such that each of the plurality of sets of orders is obtained by extracting an order twice from the plurality of orders in a manner that overlap is allowed.

5. A quantum calculation support method implemented by a computer coupled to a quantum computer, the method comprising:

   expanding an imaginary-time evolution expression into a plurality of expressions, the imaginary-time evolution expression being an expression for calculation of a thermal equilibrium expectation value at a finite temperature of a physical quantity of a system to be calculated, each of the plurality of expressions being an expression of a corresponding order among a plurality of orders;
   generating a plurality of sets of orders, each of which is obtained by extracting an order twice from the plurality of orders;

generating, for each set of the generated sets, a quantum circuit that indicates a procedure of quantum calculation of a value of the physical quantity obtained by partial imaginary-time evolution using an expression of a first order included in the set and an expression of a second order included in the set, each of the first and second orders being any of the plurality of orders;
causing the quantum computer to repeatedly execute, for each set of the generated sets, the quantum calculation using the quantum circuit generated for the set until a value of the physical quantity obtained from a result of the quantum calculation converges in a manner that an output state obtained by the quantum calculation according to the quantum circuit corresponding to the set is used as an input state in the subsequent quantum calculation; and
calculating the thermal equilibrium expectation value at the finite temperature of the physical quantity based on a value of the physical quantity after convergence for each of the generated sets.

**6.** An information processing apparatus comprising a processing unit configured to be coupled to a quantum computer via a network and execute processing comprising:

expanding an imaginary-time evolution expression into a plurality of expressions, the imaginary-time evolution expression being an expression for calculation of a thermal equilibrium expectation value at a finite temperature of a physical quantity of a system to be calculated, each of the plurality of expressions being an expression of a corresponding order among a plurality of orders;
generating a plurality of sets of orders, each of which is obtained by extracting an order twice from the plurality of orders;
generating, for each set of the generated sets, a quantum circuit that indicates a procedure of quantum calculation of a value of the physical quantity obtained by partial imaginary-time evolution using an expression of a first order included in the set and an expression of a second order included in the set, each of the first and second orders being any of the plurality of orders;
causing the quantum computer to repeatedly execute, for each set of the generated sets, the quantum calculation using the quantum circuit generated for the set until a value of the physical quantity obtained from a result of the quantum calculation converges in a manner that an output state obtained by the quantum calculation according to the quantum circuit corresponding to the set is used as an input state in the subsequent quantum calculation; and
calculating the thermal equilibrium expectation value at the finite temperature of the physical quantity based on a value of the physical quantity after convergence for each of the generated sets.

**Patentansprüche**

**1.** Quantenberechnungsunterstützungsprogramm, umfassend Anweisungen, die, wenn sie von einem Computer ausgeführt werden, der an einen Quantencomputer gekoppelt ist, den Computer veranlassen, eine Verarbeitung auszuführen, umfassend:

Expandieren eines imaginären Zeitentwicklungsausdrucks in eine Vielzahl von Ausdrücken, wobei der imaginäre Zeitentwicklungsausdruck ein Ausdruck zum Berechnen eines thermischen Gleichgewichtserwartungswerts bei einer endlichen Temperatur einer physikalischen Größe eines zu berechnenden Systems ist, wobei jeder der Vielzahl von Ausdrücken ein Ausdruck einer entsprechenden Ordnung unter einer Vielzahl von Ordnungen ist;
Erzeugen einer Vielzahl von Sätzen von Ordnungen, von denen jeder durch zweimaliges Extrahieren einer Ordnung aus der Vielzahl von Ordnungen erhalten wird;
Erzeugen einer Quantenschaltung für jeden Satz der erzeugten Sätze, die ein Verfahren der Quantenberechnung eines Werts der physikalischen Größe angibt, die durch partielle imaginäre Zeitentwicklung unter Verwendung eines Ausdrucks einer ersten Ordnung, die in dem Satz eingeschlossen ist, und eines Ausdrucks einer zweiten Ordnung, die in dem Satz eingeschlossen ist, erhalten wird, wobei jede der ersten und zweiten Ordnungen eine beliebige der Vielzahl von Ordnungen ist;
Veranlassen des Quantencomputers, für jeden Satz der erzeugten Sätze die Quantenberechnung unter Verwendung der für den Satz erzeugten Quantenschaltung wiederholt auszuführen, bis ein Wert der physikalischen Größe, der aus einem Ergebnis der Quantenberechnung erhalten wird, in einer Weise konvergiert, dass ein durch die Quantenberechnung gemäß der Quantenschaltung erhaltener Ausgangszustand, der dem Satz entspricht, als ein Eingangszustand in der nachfolgenden Quantenberechnung verwendet wird; und
Berechnen des Erwartungswerts des thermischen Gleichgewichts bei der endlichen Temperatur der physikalischen Größe auf Grundlage eines Werts der physikalischen Größe nach der Konvergenz für jeden der erzeugten Sätze.

2. Quantenberechnungsunterstützungsprogramm nach Anspruch 1, wobei,
das wiederholte Ausführen der Quantenberechnung in einer Weise durchgeführt wird, dass ein projektives Messergebnis in der Berechnungsgrundlage eines Ausgangszustands, der durch die Quantenberechnung unter Verwendung eines Eingangszustands in der N-ten (N ist eine natürliche Zahl) Quantenberechnung erhalten wird, als Eingangszustand in der (N + 1)-ten Quantenberechnung festgelegt wird.

3. Quantenberechnungsunterstützungsprogramm nach Anspruch 1, wobei,
das Erzeugen der Quantenschaltung das Erzeugen der Quantenschaltung einschließt, die unter bestimmten Bedingungen auf den Ancilla-Zuständen eine hermitsche Eigenschaft aufweist, wobei die erzeugte Quantenschaltung ein erstes unitäres Gatter, das die Berechnung einer unitären Matrix angibt, die dem Ausdruck der ersten Ordnung entspricht, und ein zweites unitäres Gatter, das die Berechnung einer unitären Matrix angibt, die dem Ausdruck der zweiten Ordnung entspricht, einschließt.

4. Quantenberechnungsunterstützungsprogramm nach Anspruch 1, wobei,
das Erzeugen der Vielzahl von Sätzen von Ordnungen derart durchgeführt wird, dass jeder der Vielzahl von Sätzen von Ordnungen erhalten wird, indem eine Ordnung zweimal aus der Vielzahl von Ordnungen in einer Weise extrahiert wird, dass eine Überlappung zulässig ist.

5. Quantenberechnungsunterstützungsverfahren, das durch einen Computer implementiert wird, der an einen Quantencomputer gekoppelt ist, das Verfahren umfassend:

Expandieren eines imaginären Zeitentwicklungsausdrucks in eine Vielzahl von Ausdrücken, wobei der imaginäre Zeitentwicklungsausdruck ein Ausdruck zum Berechnen eines thermischen Gleichgewichtserwartungswerts bei einer endlichen Temperatur einer physikalischen Größe eines zu berechnenden Systems ist, wobei jeder der Vielzahl von Ausdrücken ein Ausdruck einer entsprechenden Ordnung unter einer Vielzahl von Ordnungen ist;
Erzeugen einer Vielzahl von Sätzen von Ordnungen, von denen jeder durch zweimaliges Extrahieren einer Ordnung aus der Vielzahl von Ordnungen erhalten wird;
Erzeugen einer Quantenschaltung für jeden Satz der erzeugten Sätze, die ein Verfahren der Quantenberechnung eines Werts der physikalischen Größe angibt, die durch partielle imaginäre Zeitentwicklung unter Verwendung eines Ausdrucks einer ersten Ordnung, die in dem Satz eingeschlossen ist, und eines Ausdrucks einer zweiten Ordnung, die in dem Satz eingeschlossen ist, erhalten wird, wobei jede der ersten und zweiten Ordnungen eine beliebige der Vielzahl von Ordnungen ist;
Veranlassen des Quantencomputers, für jeden Satz der erzeugten Sätze die Quantenberechnung unter Verwendung der für den Satz erzeugten Quantenschaltung wiederholt auszuführen, bis ein Wert der physikalischen Größe, der aus einem Ergebnis der Quantenberechnung erhalten wird, in einer Weise konvergiert, dass ein durch die Quantenberechnung gemäß der Quantenschaltung erhaltener Ausgangszustand, der dem Satz entspricht, als ein Eingangszustand in der nachfolgenden Quantenberechnung verwendet wird; und
Berechnen des Erwartungswerts des thermischen Gleichgewichts bei der endlichen Temperatur der physikalischen Größe auf Grundlage eines Werts der physikalischen Größe nach der Konvergenz für jeden der erzeugten Sätze.

6. Informationsverarbeitungseinrichtung, umfassend eine Verarbeitungseinheit, die konfiguriert ist, um über ein Netzwerk an einen Quantencomputer gekoppelt zu werden und eine Verarbeitung auszuführen, umfassend:

Expandieren eines imaginären Zeitentwicklungsausdrucks in eine Vielzahl von Ausdrücken, wobei der imaginäre Zeitentwicklungsausdruck ein Ausdruck zum Berechnen eines thermischen Gleichgewichtserwartungswerts bei einer endlichen Temperatur einer physikalischen Größe eines zu berechnenden Systems ist, wobei jeder der Vielzahl von Ausdrücken ein Ausdruck einer entsprechenden Ordnung unter einer Vielzahl von Ordnungen ist;
Erzeugen einer Vielzahl von Sätzen von Ordnungen, von denen jeder durch zweimaliges Extrahieren einer Ordnung aus der Vielzahl von Ordnungen erhalten wird;
Erzeugen einer Quantenschaltung für jeden Satz der erzeugten Sätze, die ein Verfahren der Quantenberechnung eines Werts der physikalischen Größe angibt, die durch partielle imaginäre Zeitentwicklung unter Verwendung eines Ausdrucks einer ersten Ordnung, die in dem Satz eingeschlossen ist, und eines Ausdrucks einer zweiten Ordnung, die in dem Satz eingeschlossen ist, erhalten wird, wobei jede der ersten und zweiten Ordnungen eine beliebige der Vielzahl von Ordnungen ist;
Veranlassen des Quantencomputers, für jeden Satz der erzeugten Sätze, die Quantenberechnung unter Verwendung der für den Satz erzeugten Quantenschaltung wiederholt auszuführen, bis ein Wert der physikalischen Größe, der aus einem Ergebnis der Quantenberechnung erhalten wird, in einer Weise konvergiert, dass ein durch die Quantenberechnung gemäß der Quantenschaltung erhaltener Ausgangszustand, der dem Satz entspricht, als ein Eingangszustand in der nachfolgenden Quantenberechnung verwendet wird; und
Berechnen des Erwartungswerts des thermischen Gleichgewichts bei der endlichen Temperatur der physikalischen Größe auf Grundlage eines Werts der physikalischen Größe nach der Konvergenz für jeden der erzeugten Sätze.

## Revendications

**1.** Programme de support de calcul quantique comprenant des instructions qui, lorsqu'elles sont exécutées par un ordinateur couplé à un ordinateur quantique, amènent l'ordinateur à exécuter un traitement comprenant :

l'extension d'une expression d'évolution temporelle imaginaire en une pluralité d'expressions, l'expression d'évolution temporelle imaginaire étant une expression pour le calcul d'une valeur d'attente d'équilibre thermique à une température finie d'une grandeur physique d'un système à calculer, chacune de la pluralité d'expressions étant une expression d'un ordre correspondant parmi une pluralité d'ordres ;
la génération d'une pluralité d'ensembles d'ordres, chacun étant obtenu en extrayant deux fois un ordre de la pluralité d'ordres ;
la génération, pour chaque ensemble des ensembles générés, d'un circuit quantique qui indique une procédure de calcul quantique d'une valeur de la grandeur physique obtenue par évolution temporelle imaginaire partielle en utilisant une expression d'un premier ordre incluse dans l'ensemble et une expression d'un deuxième ordre incluse dans l'ensemble, chacun des premier et deuxième ordres étant l'un quelconque de la pluralité d'ordres ;
le fait d'amener l'ordinateur quantique à exécuter de manière répétée, pour chaque ensemble des ensembles générés, le calcul quantique à l'aide du circuit quantique généré pour l'ensemble jusqu'à ce qu'une valeur de la grandeur physique obtenue à partir d'un résultat du calcul quantique converge d'une manière qu'un état de sortie obtenu par le calcul quantique selon le circuit quantique correspondant à l'ensemble est utilisé comme état d'entrée dans le calcul quantique ultérieur ; et
le calcul de la valeur d'attente d'équilibre thermique à la température finie de la grandeur physique sur la base d'une valeur de la grandeur physique après convergence pour chacun des ensembles générés.

**2.** Programme de support de calcul quantique selon la revendication 1, dans lequel,
l'exécution répétée du calcul quantique est réalisée de manière à ce qu'une mesure projective aboutisse à la base de calcul d'un état de sortie obtenu par le calcul quantique à l'aide d'un état d'entrée dans un N-ième calcul quantique (N est un nombre naturel) soit définie comme un état d'entrée dans le (N + 1)-ième calcul quantique.

**3.** Programme de support de calcul quantique selon la revendication 1, dans lequel,
la génération du circuit quantique inclut la génération du circuit quantique qui présente une propriété hermitienne dans certaines conditions sur les états ancillaires, le circuit quantique généré incluant une première grille unitaire qui indique le calcul d'une matrice unitaire qui correspond à l'expression du premier ordre et une deuxième grille unitaire qui indique le calcul d'une matrice unitaire qui correspond à l'expression du deuxième ordre.

**4.** Programme de support de calcul quantique selon la revendication 1, dans lequel,
la génération de la pluralité d'ensembles d'ordres est réalisée de sorte que chacun de la pluralité d'ensembles d'ordres soit obtenu en extrayant deux fois un ordre de la pluralité d'ordres de manière à ce qu'un chevauchement soit autorisé.

**5.** Procédé de support de calcul quantique mis en œuvre par un ordinateur couplé à un ordinateur quantique, le procédé comprenant :

l'extension d'une expression d'évolution temporelle imaginaire en une pluralité d'expressions, l'expression d'évolution temporelle imaginaire étant une expression pour le calcul d'une valeur d'attente d'équilibre thermique à une température finie d'une grandeur physique d'un système à calculer, chacune de la pluralité d'expressions étant une expression d'un ordre correspondant parmi une pluralité d'ordres ;
la génération d'une pluralité d'ensembles d'ordres, chacun étant obtenu en extrayant deux fois un ordre de la pluralité d'ordres ;
la génération, pour chaque ensemble des ensembles générés, d'un circuit quantique qui indique une procédure de calcul quantique d'une valeur de la grandeur physique obtenue par évolution temporelle imaginaire partielle en utilisant une expression d'un premier ordre incluse dans l'ensemble et une expression d'un deuxième ordre incluse dans l'ensemble, chacun des premier et deuxième ordres étant l'un quelconque de la pluralité d'ordres ;
le fait d'amener l'ordinateur quantique à exécuter de manière répétée, pour chaque ensemble des ensembles générés, le calcul quantique à l'aide du circuit quantique généré pour l'ensemble jusqu'à ce qu'une valeur de la grandeur physique obtenue à partir d'un résultat du calcul quantique converge d'une manière qu'un état de sortie obtenu par le calcul quantique selon le circuit quantique correspondant à l'ensemble est utilisé comme état d'entrée dans le calcul quantique ultérieur ; et
le calcul de la valeur d'attente d'équilibre thermique à la température finie de la grandeur physique sur la base d'une valeur de la grandeur physique après convergence pour chacun des ensembles générés.

**6.** Appareil de traitement d'informations comprenant une unité de traitement configurée pour être couplée à un ordinateur quantique via un réseau et exécuter un traitement comprenant :

l'extension d'une expression d'évolution temporelle imaginaire en une pluralité d'expressions, l'expression d'évolution temporelle imaginaire étant une expression pour le calcul d'une valeur d'attente d'équilibre thermique à une température finie d'une grandeur physique d'un système à calculer, chacune de la pluralité d'expressions étant une expression d'un ordre correspondant parmi une pluralité d'ordres ;
la génération d'une pluralité d'ensembles d'ordres, chacun étant obtenu en extrayant deux fois un ordre de la pluralité d'ordres ;
la génération, pour chaque ensemble des ensembles générés, d'un circuit quantique qui indique une procédure de calcul quantique d'une valeur de la grandeur physique obtenue par évolution temporelle imaginaire partielle en utilisant une expression d'un premier ordre incluse dans l'ensemble et une expression d'un deuxième ordre incluse dans l'ensemble, chacun des premier et deuxième ordres étant l'un quelconque de la pluralité d'ordres ;
le fait d'amener l'ordinateur quantique à exécuter de manière répétée, pour chaque ensemble des ensembles générés, le calcul quantique à l'aide du circuit quantique généré pour l'ensemble jusqu'à ce qu'une valeur de la grandeur physique obtenue à partir d'un résultat du calcul quantique converge d'une manière qu'un état de sortie obtenu par le calcul quantique selon le circuit quantique correspondant à l'ensemble est utilisé comme état d'entrée dans le calcul quantique ultérieur ; et
le calcul de la valeur d'attente d'équilibre thermique à la température finie de la grandeur physique sur la base d'une valeur de la grandeur physique après convergence pour chacun des ensembles générés.

FIG. 1

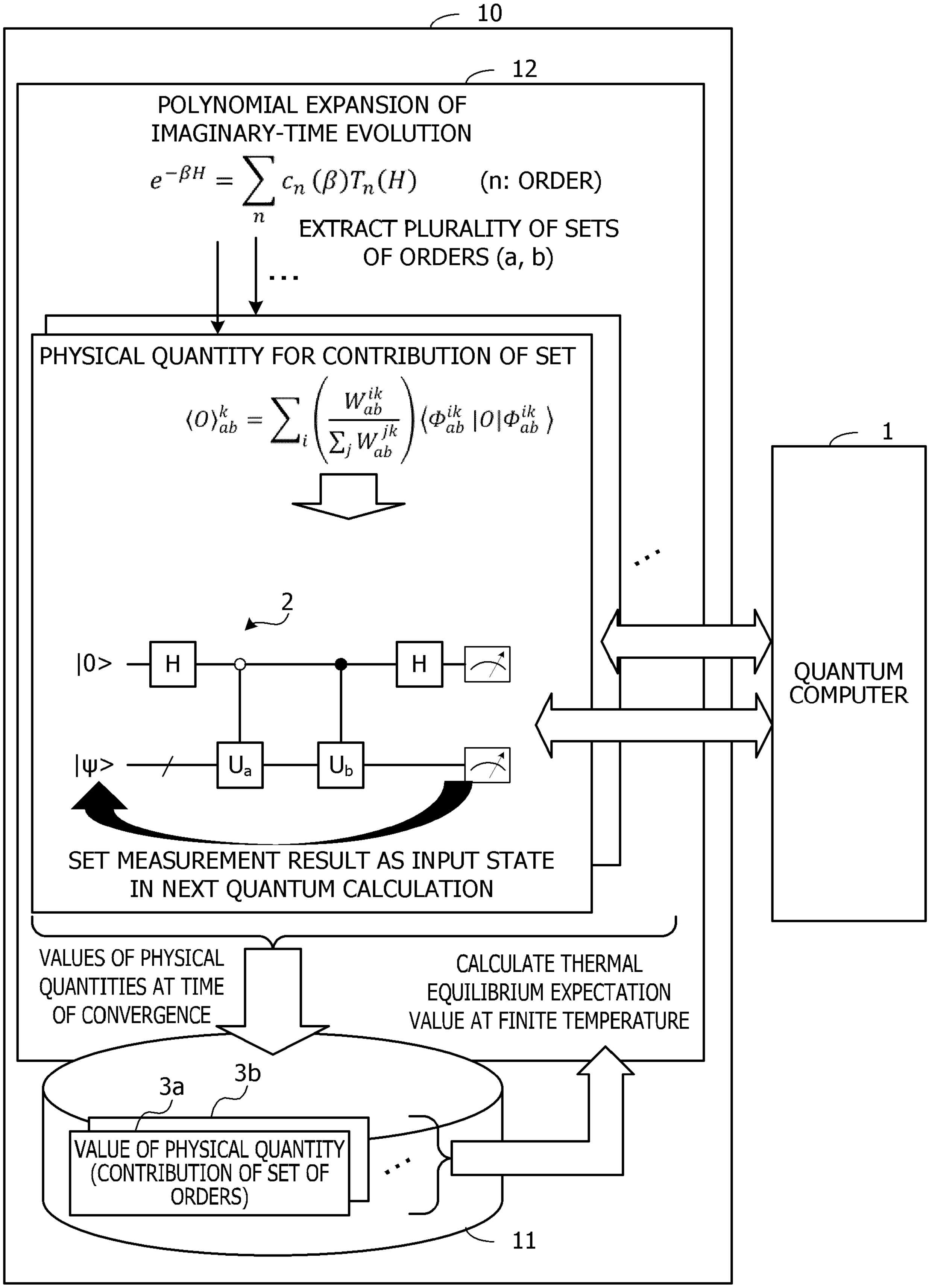
10
12
POLYNOMIAL EXPANSION OF IMAGINARY-TIME EVOLUTION
$e^{-\beta H} = \sum_n c_n(\beta)T_n(H)$ (n: ORDER)
EXTRACT PLURALITY OF SETS OF ORDERS (a, b)
PHYSICAL QUANTITY FOR CONTRIBUTION OF SET
$\langle O\rangle_{ab}^{k} = \sum_i \left(\frac{W_{ab}^{ik}}{\sum_j W_{ab}^{jk}}\right)\langle\Phi_{ab}^{ik}|O|\Phi_{ab}^{ik}\rangle$
2
|0>
H
H
|ψ>
$U_a$
$U_b$
SET MEASUREMENT RESULT AS INPUT STATE IN NEXT QUANTUM CALCULATION
1
QUANTUM COMPUTER
VALUES OF PHYSICAL QUANTITIES AT TIME OF CONVERGENCE
CALCULATE THERMAL EQUILIBRIUM EXPECTATION VALUE AT FINITE TEMPERATURE
3a
3b
VALUE OF PHYSICAL QUANTITY (CONTRIBUTION OF SET OF ORDERS)
11

FIG. 2

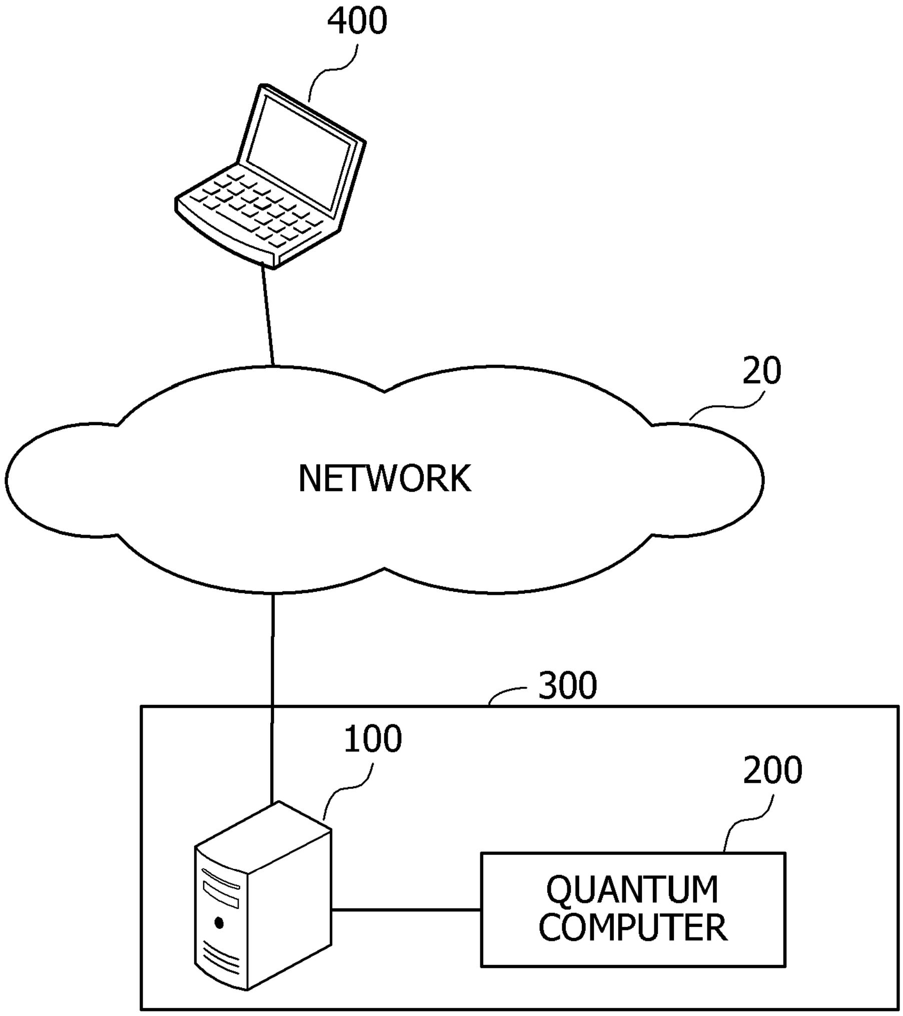

FIG. 3

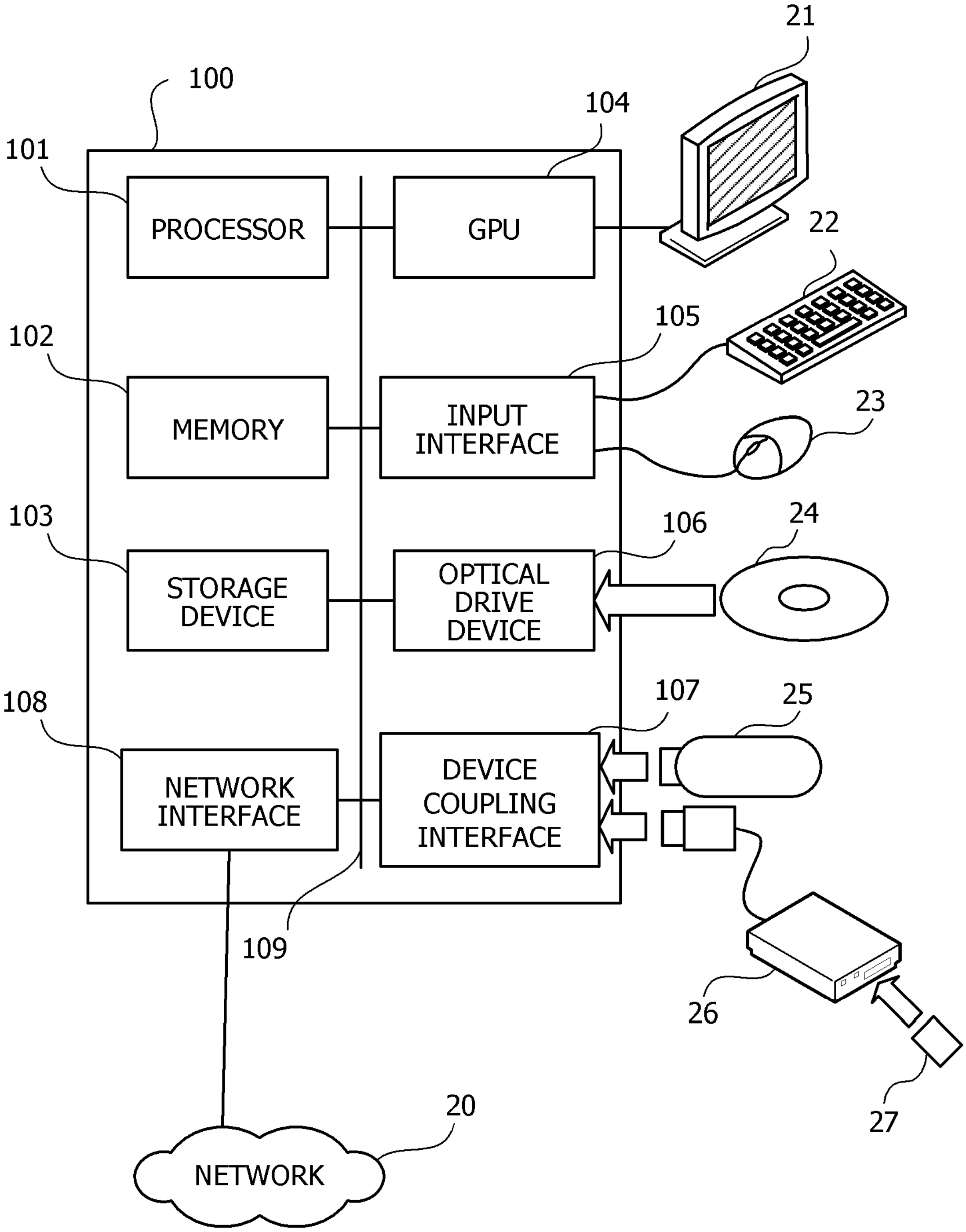
100
101
PROCESSOR
104
GPU
21
22
102
MEMORY
105
INPUT INTERFACE
23
103
STORAGE DEVICE
106
OPTICAL DRIVE DEVICE
24
108
NETWORK INTERFACE
107
DEVICE COUPLING INTERFACE
25
109
26
27
20
NETWORK

FIG. 4

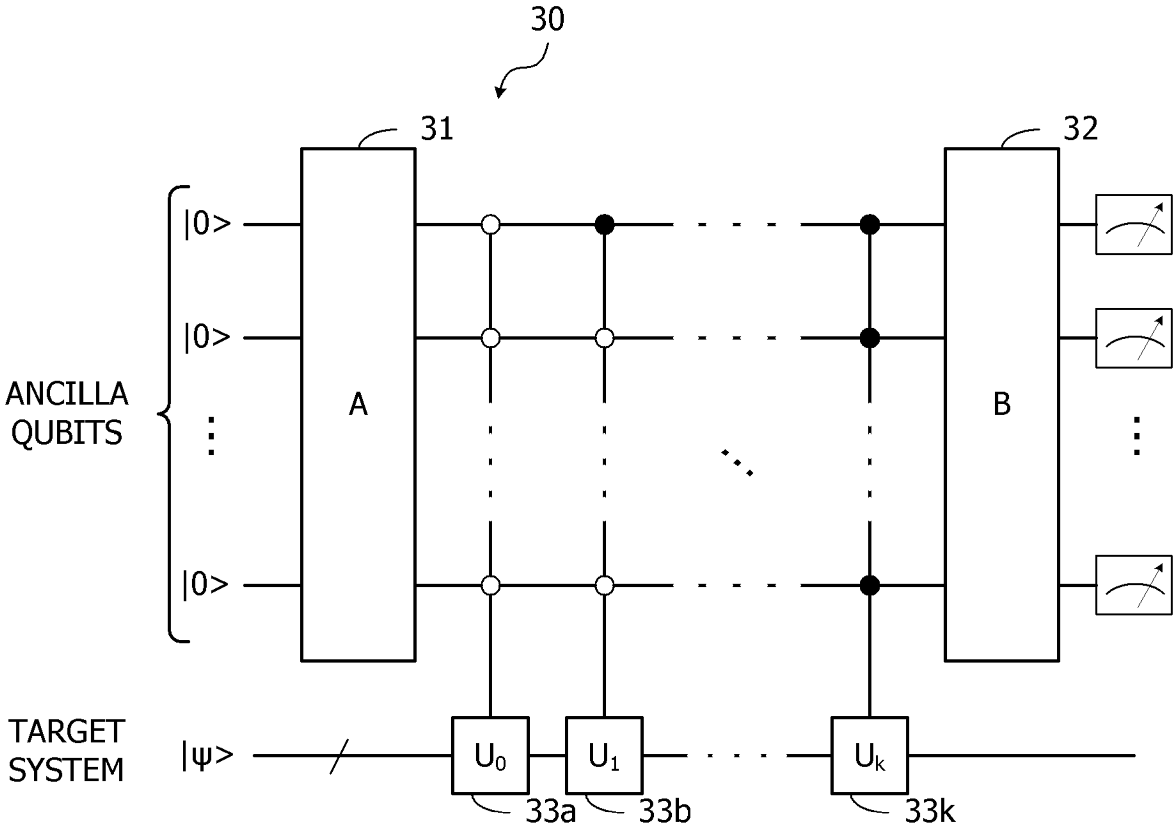
30
31
32
ANCILLA QUBITS
|0>
|0>
|0>
A
B
TARGET SYSTEM
|ψ>
U0
U1
Uk
33a
33b
33k

FIG. 5

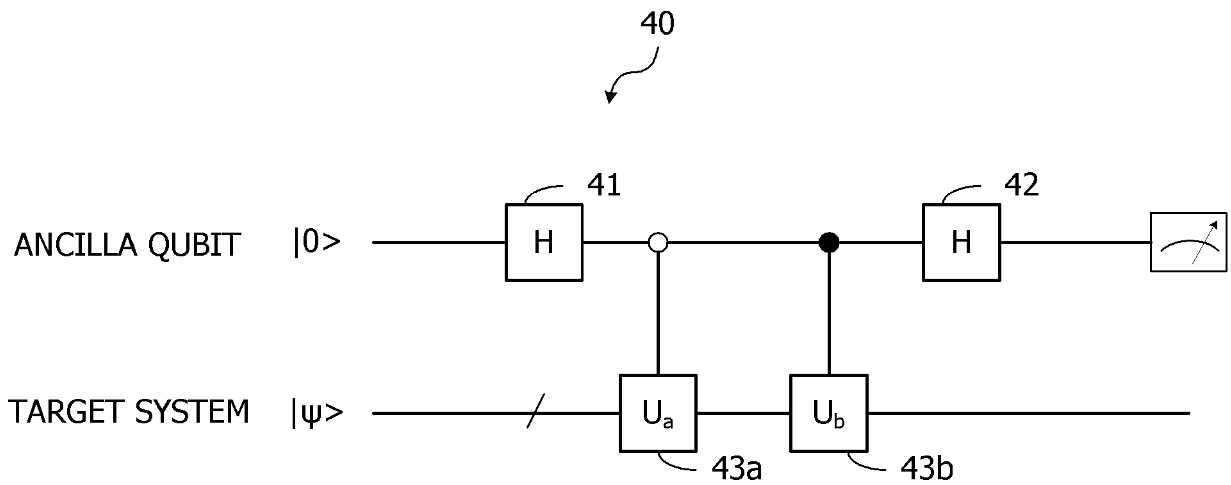

FIG. 6

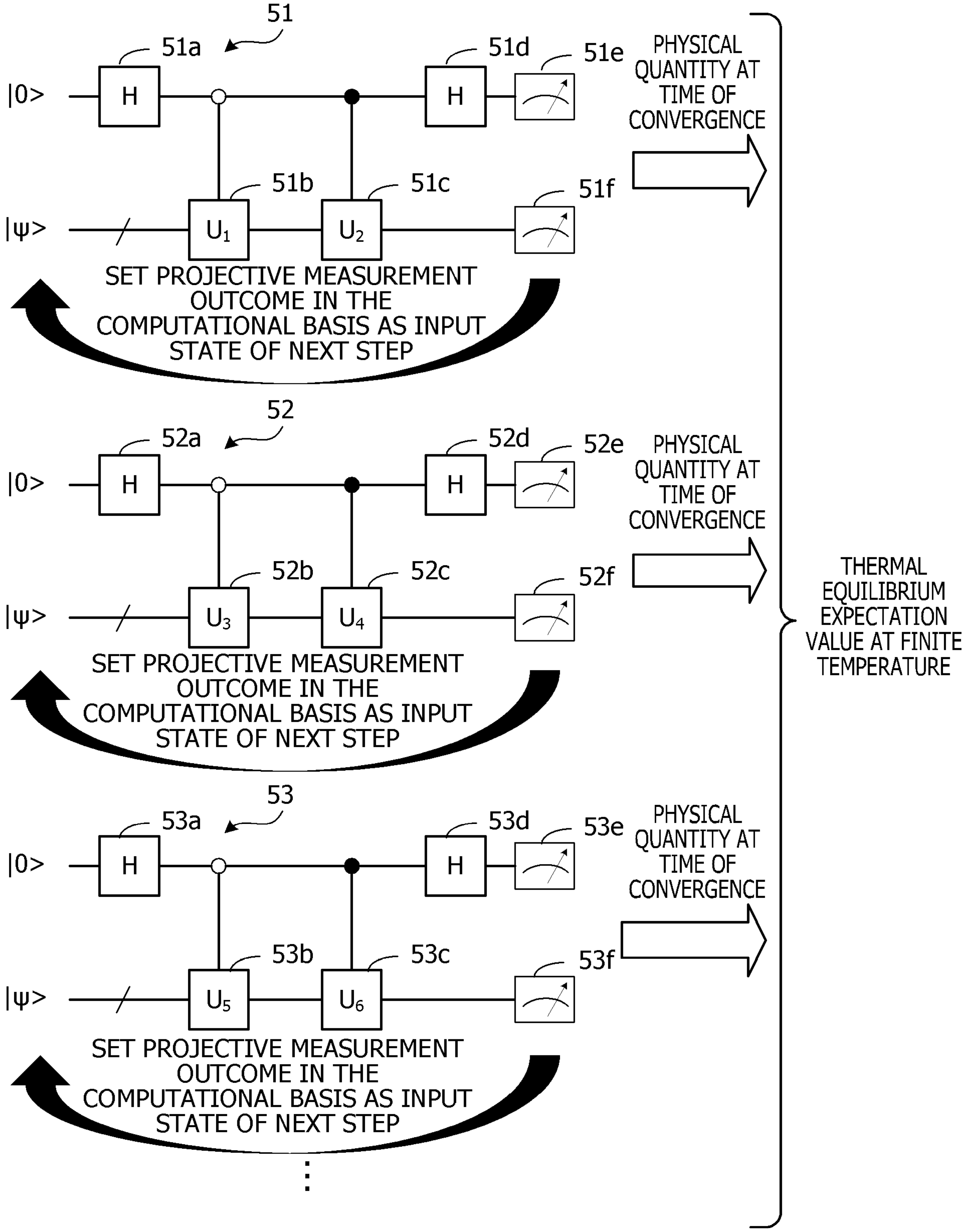
51
51a
51d
51e
|0>
H
H
51b
51c
51f
|ψ>
U1
U2
SET PROJECTIVE MEASUREMENT OUTCOME IN THE COMPUTATIONAL BASIS AS INPUT STATE OF NEXT STEP
PHYSICAL QUANTITY AT TIME OF CONVERGENCE
52
52a
52d
52e
|0>
H
H
52b
52c
52f
|ψ>
U3
U4
SET PROJECTIVE MEASUREMENT OUTCOME IN THE COMPUTATIONAL BASIS AS INPUT STATE OF NEXT STEP
PHYSICAL QUANTITY AT TIME OF CONVERGENCE
53
53a
53d
53e
|0>
H
H
53b
53c
53f
|ψ>
U5
U6
SET PROJECTIVE MEASUREMENT OUTCOME IN THE COMPUTATIONAL BASIS AS INPUT STATE OF NEXT STEP
PHYSICAL QUANTITY AT TIME OF CONVERGENCE
THERMAL EQUILIBRIUM EXPECTATION VALUE AT FINITE TEMPERATURE

FIG. 7

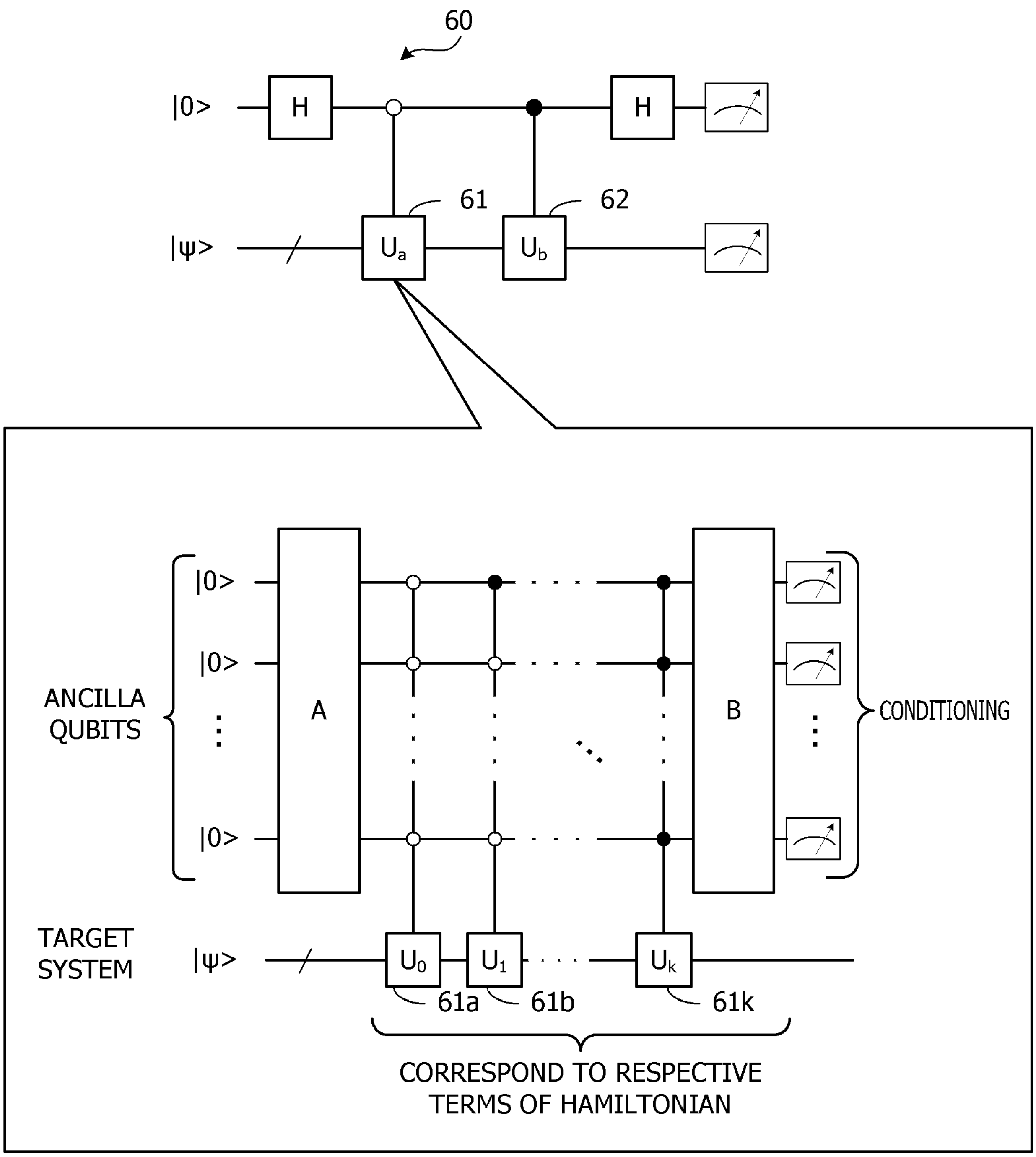
60
|0>
H
H
61
62
|ψ>
Ua
Ub
ANCILLA
QUBITS
|0>
|0>
|0>
A
B
CONDITIONING
TARGET
SYSTEM
|ψ>
U0
U1
Uk
61a
61b
61k
CORRESPOND TO RESPECTIVE
TERMS OF HAMILTONIAN

FIG. 8

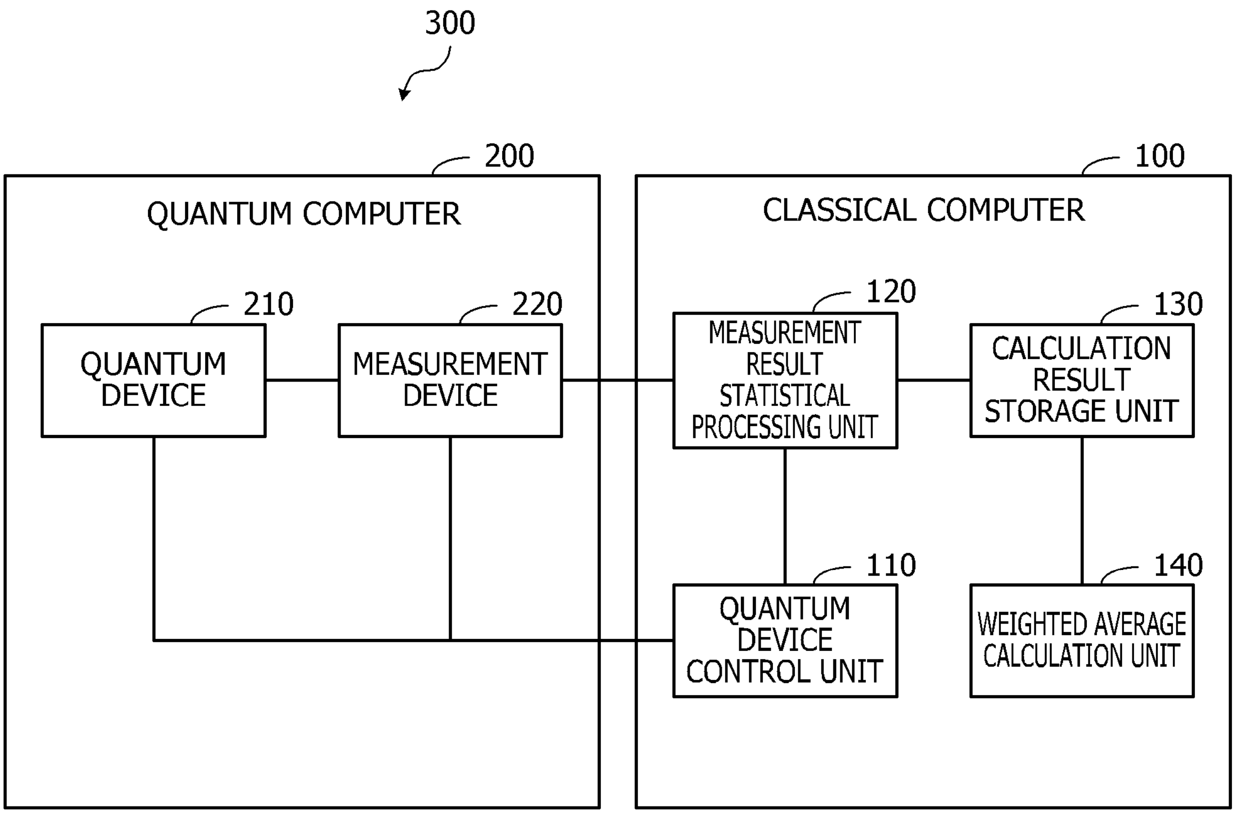
300
200
QUANTUM COMPUTER
210
QUANTUM DEVICE
220
MEASUREMENT DEVICE
100
CLASSICAL COMPUTER
120
MEASUREMENT RESULT STATISTICAL PROCESSING UNIT
130
CALCULATION RESULT STORAGE UNIT
110
QUANTUM DEVICE CONTROL UNIT
140
WEIGHTED AVERAGE CALCULATION UNIT

FIG. 9

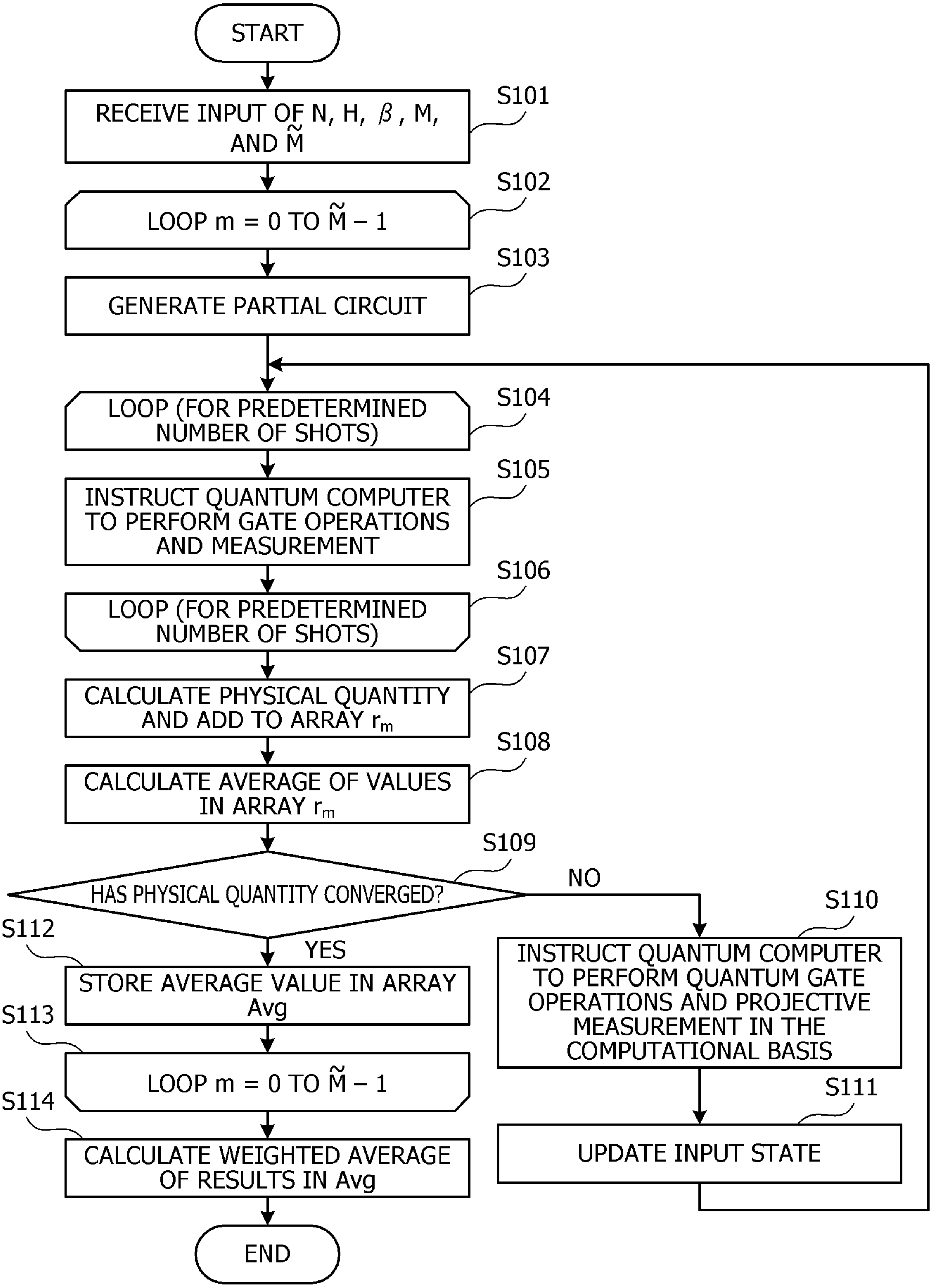
START
RECEIVE INPUT OF N, H, β, M, AND M̃
S101
LOOP m = 0 TO M̃ − 1
S102
GENERATE PARTIAL CIRCUIT
S103
LOOP (FOR PREDETERMINED NUMBER OF SHOTS)
S104
INSTRUCT QUANTUM COMPUTER TO PERFORM GATE OPERATIONS AND MEASUREMENT
S105
LOOP (FOR PREDETERMINED NUMBER OF SHOTS)
S106
CALCULATE PHYSICAL QUANTITY AND ADD TO ARRAY $r_m$
S107
CALCULATE AVERAGE OF VALUES IN ARRAY $r_m$
S108
HAS PHYSICAL QUANTITY CONVERGED?
S109
NO
YES
INSTRUCT QUANTUM COMPUTER TO PERFORM QUANTUM GATE OPERATIONS AND PROJECTIVE MEASUREMENT IN THE COMPUTATIONAL BASIS
S110
UPDATE INPUT STATE
S111
STORE AVERAGE VALUE IN ARRAY Avg
S112
LOOP m = 0 TO M̃ − 1
S113
CALCULATE WEIGHTED AVERAGE OF RESULTS IN Avg
S114
END

FIG. 10

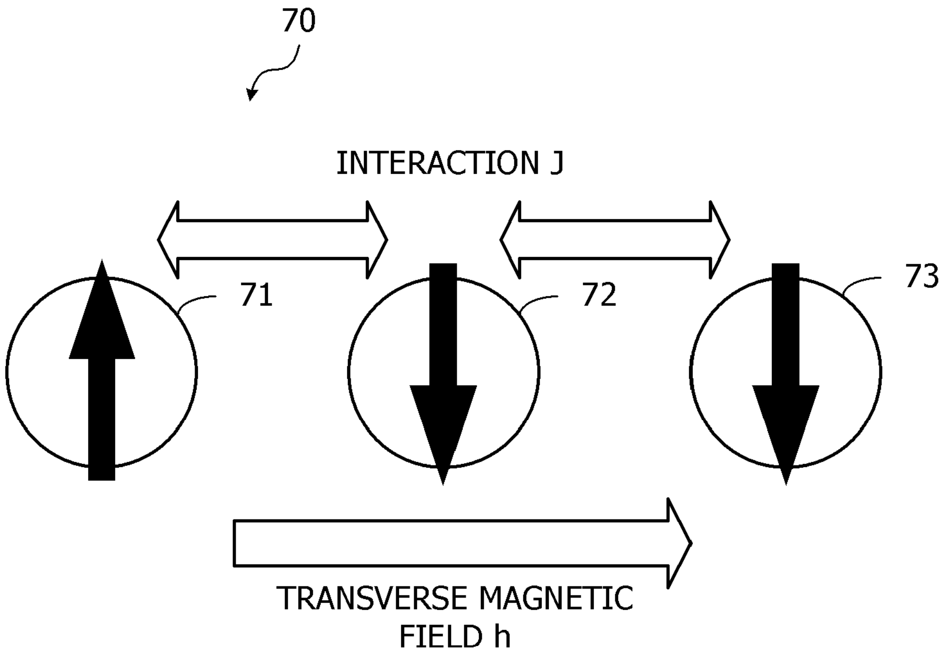


71 TO 73: SPINS

FIG. 11

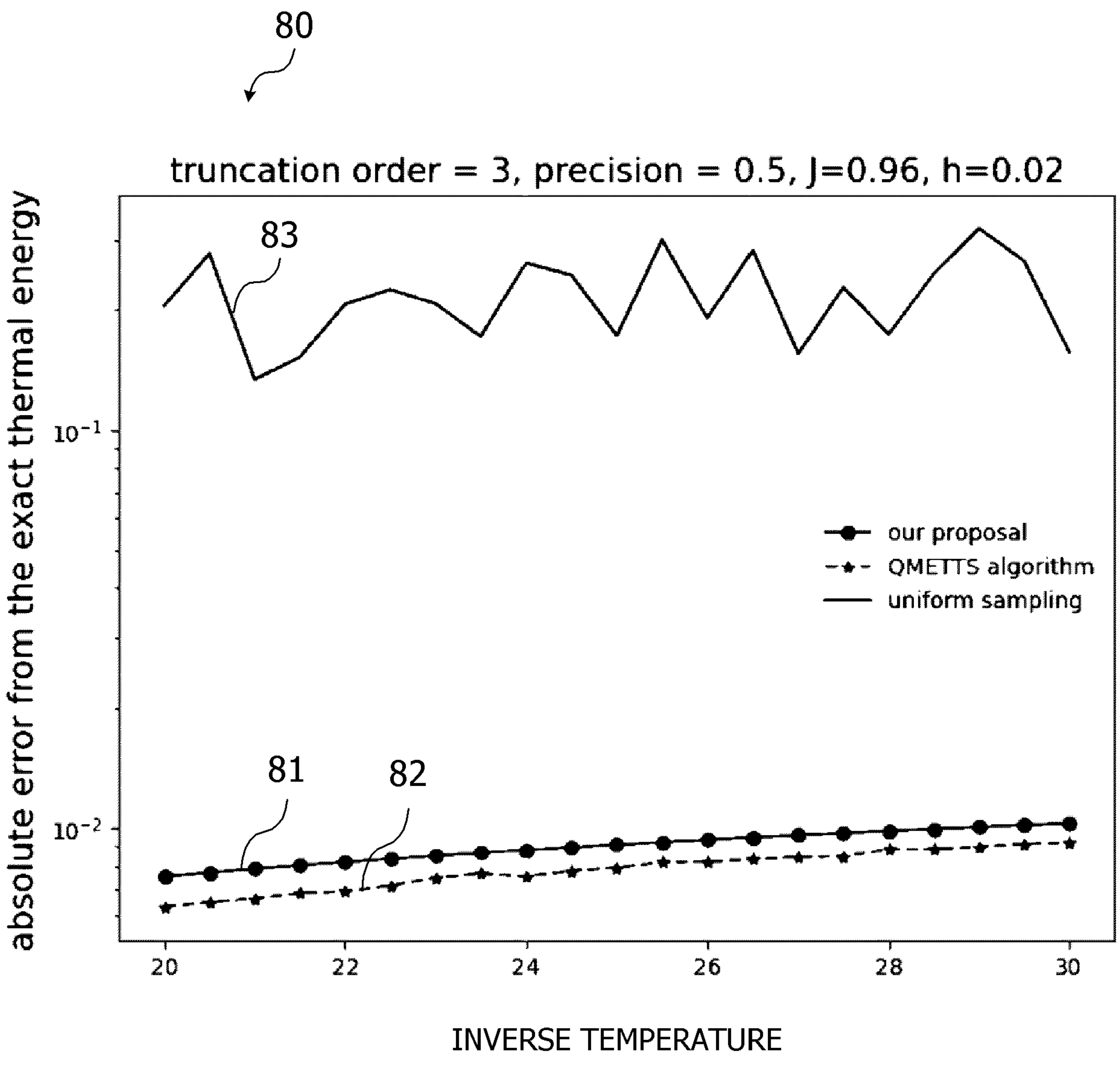
80
truncation order = 3, precision = 0.5, J=0.96, h=0.02
83
81
82
absolute error from the exact thermal energy
$10^{-1}$
$10^{-2}$
our proposal
QMETTS algorithm
uniform sampling
20
22
24
26
28
30
INVERSE TEMPERATURE

FIG. 12

90

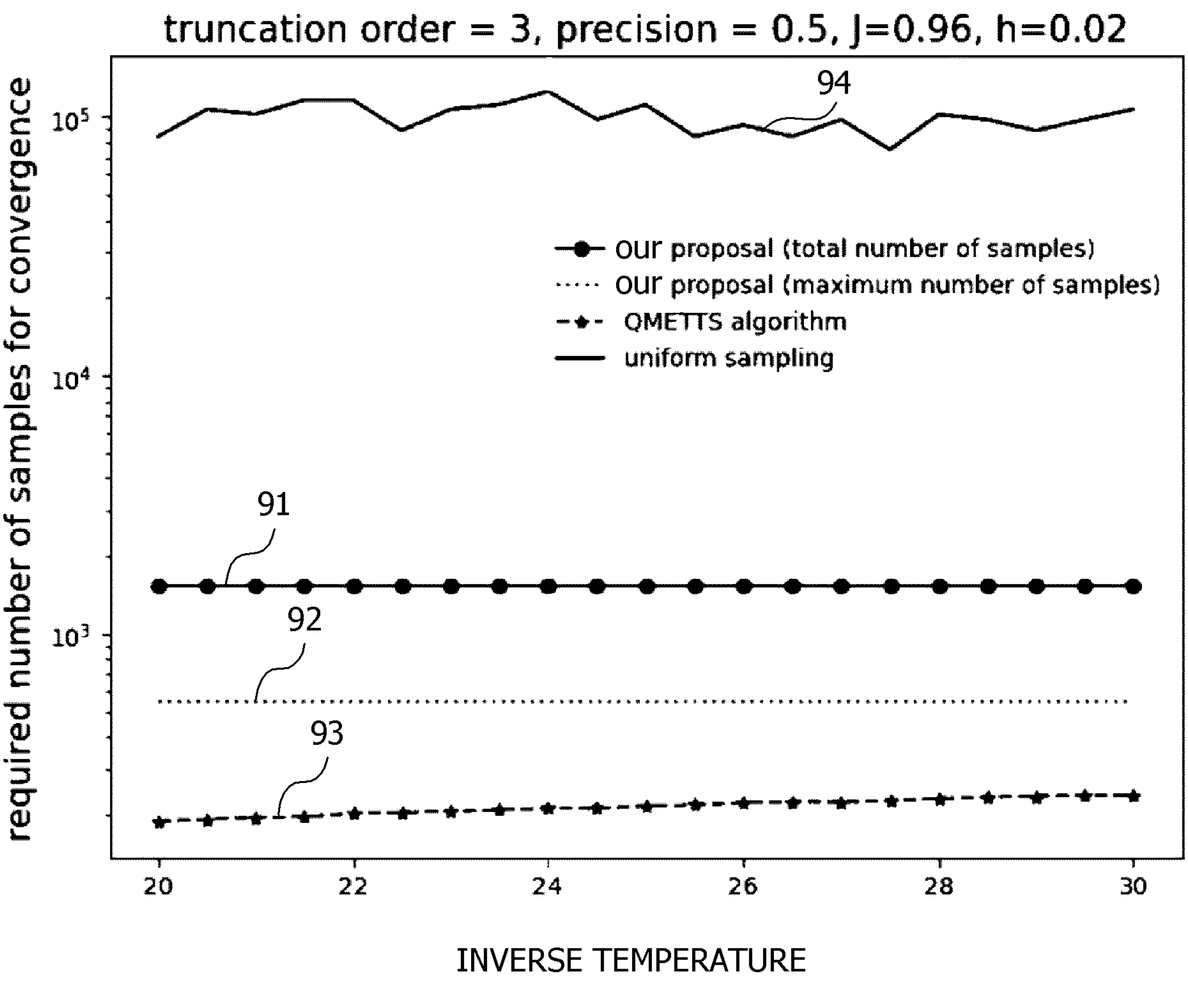
truncation order = 3, precision = 0.5, J=0.96, h=0.02
required number of samples for convergence
$10^5$
$10^4$
$10^3$
94
91
92
93
our proposal (total number of samples)
our proposal (maximum number of samples)
QMETTS algorithm
uniform sampling
20
22
24
26
28
30
INVERSE TEMPERATURE

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020090559 A
- JP 2023043100 A
- US 20200057957


### Non-patent literature cited in the description


- Adaptive variational quantum minimally entangled typical thermal states for finite temperature simulations. **JOÃO C GETELINA et al.** ARXIV.ORG. CORNELL UNIVERSITY LIBRARY, 201 OLIN LIBRARY CORNELL UNIVERSITY, 04 August 2023
- Stochastic series expansion method with operator-loop update. **ANDERS W SANDVIK**. ARXIV.ORG. CORNELL UNIVERSITY LIBRARY, 201 OLIN LIBRARY CORNELL UNIVERSITY, 16 February 1999
- **E M STOUDENMIRE** ; **STEVEN R WHITE**. Minimally entangled typical thermal state algorithms. *New Journal of Physics*, May 2010, vol. 12, 055026
- **ANDREW M. CHILDS** ; **NATHAN WIEBE**. Hamiltonian simulation using linear combinations of unitary operations. *Quantum information & Computation*, November 2012, vol. 12 (11-12), 901-924